(19) Europäisches Patentamt
European Patent Office
Office européen des brevets

(11) EP 4 319 452 A1

(12) EUROPEAN PATENT APPLICATION
published in accordance with Art. 153(4) EPC

(43) Date of publication:
07.02.2024 Bulletin 2024/06

(51) International Patent Classification (IPC):
H04W 76/14 (2018.01)   H04W 76/30 (2018.01)
H04W 76/20 (2018.01)   H04W 40/22 (2009.01)
H04W 40/12 (2009.01)   H04W 24/10 (2009.01)
H04W 88/04 (2009.01)   H04W 92/18 (2009.01)
H04W 76/19 (2018.01)

(21) Application number: 22781699.8

(22) Date of filing: 01.04.2022

(52) Cooperative Patent Classification (CPC):
H04W 24/10; H04W 40/12; H04W 40/22;
H04W 76/14; H04W 76/19; H04W 76/20;
H04W 76/30; H04W 88/04; H04W 92/18

(86) International application number:
PCT/KR2022/004723

(87) International publication number:
WO 2022/211580 (06.10.2022 Gazette 2022/40)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 01.04.2021  US 202163169795 P
19.04.2021  KR 20210050520
22.04.2021  US 202163178507 P
26.04.2021  KR 20210053867
30.04.2021  US 202163181980 P
04.05.2021  KR 20210058168
10.05.2021  KR 20210060199

(71) Applicant: LG Electronics Inc.
Yeongdeungpo-gu
Seoul 07336 (KR)

(72) Inventors:
• BACK, Seoyoung
Seoul 06772 (KR)
• PARK, Giwon
Seoul 06772 (KR)
• LEE, Seungmin
Seoul 06772 (KR)
• HONG, Jongwoo
Seoul 06772 (KR)

(74) Representative: Plasseraud IP
66, rue de la Chaussée d'Antin
75440 Paris Cedex 09 (FR)

(54) **RELAY UE SELECTION METHOD ON BASIS OF QOS IN WIRELESS COMMUNICATION SYSTEM**

(57) In a sidelink-related operation method by a remote UE in a wireless communication system, one embodiment is a method in which: the remote UE receives a predetermined signal from each of one or more candidate relay UE; the remote UE measures the predetermined signal; and the remote UE selects a relay UE, wherein the predetermined signal comprises information relating to a Uu link threshold of each candidate relay UE, and the remote UE selects the relay UE on the basis of the QoS of a service to be transmitted and received by means of the relay and information relating to the Uu link threshold of each candidate relay UE.

FIG. 12

EP 4 319 452 A1

**Description**

**TECHNICAL FIELD**

The present disclosure relates to a wireless communication system, and more particularly to a method and device related to relay user equipment (UE) selection.

**BACKGROUND**

Wireless communication systems are being widely deployed to provide various types of communication services such as voice and data. In general, a wireless communication system is a multiple access system capable of supporting communication with multiple users by sharing available system resources (bandwidth, transmission power, etc.). Examples of the multiple access system include a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system, and a multi carrier frequency division multiple access (MC-FDMA) system.

A wireless communication system uses various radio access technologies (RATs) such as long term evolution (LTE), LTE-advanced (LTE-A), and wireless fidelity (WiFi). 5th generation (5G) is such a wireless communication system. Three key requirement areas of 5G include (1) enhanced mobile broadband (eMBB), (2) massive machine type communication (mMTC), and (3) ultra-reliable and low latency communications (URLLC). Some use cases may require multiple dimensions for optimization, while others may focus only on one key performance indicator (KPI). 5G supports such diverse use cases in a flexible and reliable way.

eMBB goes far beyond basic mobile Internet access and covers rich interactive work, media and entertainment applications in the cloud or augmented reality (AR). Data is one of the key drivers for 5G and in the 5G era, we may for the first time see no dedicated voice service. In 5G, voice is expected to be handled as an application program, simply using data connectivity provided by a communication system. The main drivers for an increased traffic volume are the increase in the size of content and the number of applications requiring high data rates. Streaming services (audio and video), interactive video, and mobile Internet connectivity will continue to be used more broadly as more devices connect to the Internet. Many of these applications require always-on connectivity to push real time information and notifications to users. Cloud storage and applications are rapidly increasing for mobile communication platforms. This is applicable for both work and entertainment. Cloud storage is one particular use case driving the growth of uplink data rates. 5G will also be used for remote work in the cloud which, when done with tactile interfaces, requires much lower end-to-end latencies in order to maintain a good user experience. Entertainment, for example, cloud gaming and video streaming, is another key driver for the increasing need for mobile broadband capacity. Entertainment will be very essential on smart phones and tablets everywhere, including high mobility environments such as trains, cars and airplanes. Another use case is augmented reality (AR) for entertainment and information search, which requires very low latencies and significant instant data volumes.

One of the most expected 5G use cases is the functionality of actively connecting embedded sensors in every field, that is, mMTC. It is expected that there will be 20.4 billion potential Internet of things (IoT) devices by 2020. In industrial IoT, 5G is one of areas that play key roles in enabling smart city, asset tracking, smart utility, agriculture, and security infrastructure.

URLLC includes services which will transform industries with ultra-reliable/available, low latency links such as remote control of critical infrastructure and self-driving vehicles. The level of reliability and latency are vital to smart-grid control, industrial automation, robotics, drone control and coordination, and so on.

Now, multiple use cases will be described in detail.

5G may complement fiber-to-the home (FTTH) and cable-based broadband (or data-over-cable service interface specifications (DOCSIS)) as a means of providing streams at data rates of hundreds of megabits per second to giga bits per second. Such a high speed is required for TV broadcasts at or above a resolution of 4K (6K, 8K, and higher) as well as virtual reality (VR) and AR. VR and AR applications mostly include immersive sport games. A special network configuration may be required for a specific application program. For VR games, for example, game companies may have to integrate a core server with an edge network server of a network operator in order to minimize latency.

The automotive sector is expected to be a very important new driver for 5G, with many use cases for mobile communications for vehicles. For example, entertainment for passengers requires simultaneous high capacity and high mobility mobile broadband, because future users will expect to continue their good quality connection independent of their location and speed. Other use cases for the automotive sector are AR dashboards. These display overlay information on top of what a driver is seeing through the front window, identifying objects in the dark and telling the driver about the distances and movements of the objects. In the future, wireless modules will enable communication between vehicles themselves, information exchange between vehicles and supporting infrastructure and between vehicles and other connected devices (e.g., those carried by pedestrians). Safety systems may guide drivers on alternative courses of action to allow them to drive more safely and lower the risks of accidents. The next stage will be remote-controlled or self-driving vehicles. These require very reliable, very fast communication between different self-driving vehicles and between vehicles and infrastructure. In the future, self-driving vehicles will execute all driving activities, while drivers are focusing on traffic abnormality elusive to the vehicles themselves. The technical requirements for self-driving vehicles call for ultra-low latencies and ultra-high reliability, increasing traffic safety to levels humans cannot achieve.

Smart cities and smart homes, often referred to as smart society, will be embedded with dense wireless sensor networks. Distributed networks of intelligent sensors will identify conditions for cost- and energy-efficient maintenance of the city or home. A similar setup can be done for each home, where temperature sensors, window and heating controllers, burglar alarms, and home appliances are all connected wirelessly. Many of these sensors are typically characterized by low data rate, low power, and low cost, but for example, real time high definition (HD) video may be required in some types of devices for surveillance.

The consumption and distribution of energy, including heat or gas, is becoming highly decentralized, creating the need for automated control of a very distributed sensor network. A smart grid interconnects such sensors, using digital information and communications technology to gather and act on information. This information may include information about the behaviors of suppliers and consumers, allowing the smart grid to improve the efficiency, reliability, economics and sustainability of the production and distribution of fuels such as electricity in an automated fashion. A smart grid may be seen as another sensor network with low delays.

The health sector has many applications that may benefit from mobile communications. Communications systems enable telemedicine, which provides clinical health care at a distance. It helps eliminate distance barriers and may improve access to medical services that would often not be consistently available in distant rural communities. It is also used to save lives in critical care and emergency situations. Wireless sensor networks based on mobile communication may provide remote monitoring and sensors for parameters such as heart rate and blood pressure.

Wireless and mobile communications are becoming increasingly important for industrial applications. Wires are expensive to install and maintain, and the possibility of replacing cables with reconfigurable wireless links is a tempting opportunity for many industries. However, achieving this requires that the wireless connection works with a similar delay, reliability and capacity as cables and that its management is simplified. Low delays and very low error probabilities are new requirements that need to be addressed with 5G

Finally, logistics and freight tracking are important use cases for mobile communications that enable the tracking of inventory and packages wherever they are by using location-based information systems. The logistics and freight tracking use cases typically require lower data rates but need wide coverage and reliable location information.

A wireless communication system is a multiple access system that supports communication of multiple users by sharing available system resources (a bandwidth, transmission power, etc.). Examples of multiple access systems include a CDMA system, an FDMA system, a TDMA system, an OFDMA system, an SC-FDMA system, and an MC-FDMA system.

Sidelink (SL) refers to a communication scheme in which a direct link is established between user equipments (UEs) and the UEs directly exchange voice or data without intervention of a base station (BS). SL is considered as a solution of relieving the BS of the constraint of rapidly growing data traffic.

Vehicle-to-everything (V2X) is a communication technology in which a vehicle exchanges information with another vehicle, a pedestrian, and infrastructure by wired/wireless communication. V2X may be categorized into four types: vehicle-to-vehicle (V2V), vehicle-to-infrastructure (V2I), vehicle-to-network (V2N), and vehicle-to-pedestrian (V2P). V2X communication may be provided via a PC5 interface and/or a Uu interface.

As more and more communication devices demand larger communication capacities, there is a need for enhanced mobile broadband communication relative to existing RATs. Accordingly, a communication system is under discussion, for which services or UEs sensitive to reliability and latency are considered. The next-generation RAT in which eMBB, MTC, and URLLC are considered is referred to as new RAT or NR. In NR, V2X communication may also be supported.

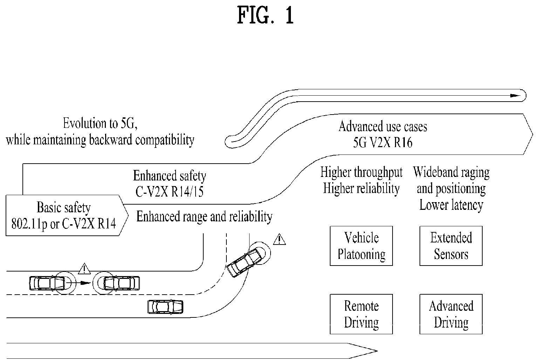

FIG. 1 is a diagram illustrating V2X communication based on pre-NR RAT and V2X communication based on NR in comparison.

For V2X communication, a technique of providing safety service based on V2X messages such as basic safety message (BSM), cooperative awareness message (CAM), and decentralized environmental notification message (DENM) was mainly discussed in the pre-NR RAT. The V2X message may include location information, dynamic information, and attribute information. For example, a UE may transmit a CAM of a periodic message type and/or a DENM of an event-triggered type to another UE.

For example, the CAM may include basic vehicle information including dynamic state information such as a direction and a speed, vehicle static data such as dimensions, an external lighting state, path details, and so on. For example, the UE may broadcast the CAM which may have a latency less than 100 ms. For example, when an unexpected incident occurs, such as breakage or an accident of a vehicle, the UE may generate the DENM and transmit the DENM to another UE. For example, all vehicles within the transmission range of the UE may receive the CAM and/or the DENM. In this case, the DENM may have priority over the CAM.

In relation to V2X communication, various V2X scenarios are presented in NR. For example, the V2X scenarios include vehicle platooning, advanced driving, extended sensors, and remote driving.

For example, vehicles may be dynamically grouped and travel together based on vehicle platooning. For example, to perform platoon operations based on vehicle platooning, the vehicles of the group may receive periodic data from a leading vehicle. For example, the vehicles of the group may widen or narrow their gaps based on the periodic data.

For example, a vehicle may be semi-automated or full-automated based on advanced driving. For example, each vehicle may adjust a trajectory or maneuvering based on data obtained from a nearby vehicle and/or a nearby logical entity. For example, each vehicle may also share a dividing intention with nearby vehicles.

Based on extended sensors, for example, raw or processed data obtained through local sensor or live video data may be exchanged between vehicles, logical entities, terminals of pedestrians and/or V2X application servers. Accordingly, a vehicle may perceive an advanced environment relative to an environment perceivable by its sensor.

Based on remote driving, for example, a remote driver or a V2X application may operate or control a remote vehicle on behalf of a person incapable of driving or in a dangerous environment. For example, when a path may be predicted as in public transportation, cloud computing-based driving may be used in operating or controlling the remote vehicle. For example, access to a cloud-based back-end service platform may also be used for remote driving.

A scheme of specifying service requirements for various V2X scenarios including vehicle platooning, advanced driving, extended sensors, and remote driving is under discussion in NR-based V2X communication.

## DETAILED DESCRIPTION

### TECHNICAL SOLUTION

An object of embodiment(s) is a relay user equipment (UE) selection method based on quality of service (QoS).

### TECHNICAL SOLUTION

According to an embodiment, a sidelink-related operation method of a remote user equipment (UE) in a wireless communication system includes receiving a predetermined signal from each of one or more candidate relay UEs, by a remote UE, performing measurement on the predetermined signal, by the remote UE, and selecting a relay UE, by the remote UE, wherein the predetermined signal includes Uu link threshold-related information of each of the candidate relay UEs, and the remote UE selects the relay UE based on quality of service (QoS) of a service to be transmitted and received through the relay and the Uu link threshold-related information of each of the candidate relay UE.

According to an embodiment, a remote user equipment (UE) in a wireless communication system includes at least one processor, and at least one computer memory operatively connected to the at least one processor and configured to store instructions that, when executed, cause the at least one processor to perform operations including receiving a predetermined signal from each of one or more candidate relay UEs, performing measurement on the predetermined signal, and selecting a relay UE, wherein the predetermined signal includes Uu link threshold-related information of each of the candidate relay UEs, and the remote UE selects the relay UE based on quality of service (QoS) of a service to be transmitted and received through the relay and the Uu link threshold-related information of each of the candidate relay UE.

According to an embodiment, a processor for performing operations for a remote user equipment (UE) in a wireless communication system is provided, and the operations includes receiving a predetermined signal from each of one or more candidate relay UEs, performing measurement on the predetermined signal, and selecting a relay UE, wherein the predetermined signal includes Uu link threshold-related information of each of the candidate relay UEs, and the remote UE selects the relay UE based on quality of service (QoS) of a service to be transmitted and received through the relay and the Uu link threshold-related information of each of the candidate relay UE.

According to an embodiment, a non-volatile computer-readable storage medium for storing at least one computer program including an instruction that, when executed by at least one processor, causes the at least one processor to perform operations for a remote user equipment (UE) is provided, and the operations includes receiving a predetermined signal from each of one or more candidate relay UEs, performing measurement on the predetermined signal, and selecting a relay UE, wherein the predetermined signal includes Uu link threshold-related information of each of the candidate relay UEs, and the remote UE selects the relay UE based on quality of service (QoS) of a service to be transmitted and received through the relay and the Uu link threshold-related information of each of the candidate relay UE.

The selecting of the relay UE may include determining a candidate relay UE set including relay UEs having a greater Uu link threshold value than a first Uu link threshold related to the QoS and selecting a relay UE having a highest received signal strength from the candidate relay set, by the remote UE.

The first Uu link threshold may be different depending on the service.

Relay UEs included in the candidate relay UE set may satisfy a second Uu link threshold corresponding to a minimum Uu link signal strength for a relay.

Based on absence of the relay UE included in the candidate relay UE set, the remote UE may select a relay UE with a highest signal strength among the relay UEs that satisfy the second Uu link threshold.

Based on the predetermined signal being a discovery message, the remote UE may perform measurement even if only physical layer ID information is successfully decoded from the physical layer ID information and medium access control (MAC) layer ID information of the discovery message.

A sidelink control channel (SCI) related to the discovery message may include only a source ID from the source ID and a destination ID.

The measurement may be related to sidelink reference signal received power (SD-RSRP).

A relay load of the relay UE may be measured based on a number of HARQ processes, and a channel occupancy ratio (CR) limit.

The relay UE may measure a relay load based on at least one of information related to a CR limit margin for each priority, or information indicating that a resource with a measured CR value for each priority, which is equal to or greater than a preset ratio of a CR limit on average, is used and that a resource with a CR value of a group having a high priority, which is equal to or greater than a preset ratio of a CR limit on average, is used

The remote UE may receive information triggering relay reselection from the selected relay UE.

The information triggering the relay reselection may be transmitted based on that the relay UE does not satisfy a Uu threshold condition.

## ADVANTAGEOUS EFFECTS

According to an embodiment, measurement precision may be increased to use both SL-RSRP and sidelink reference signal received power (SD-RSRP). In addition, when measurements related to relay reselection using SL-RSRP are performed, burden of continuously measuring a discovery signal may be reduced.

## BRIEF DESCRIPTION OF THE DRAWINGS

The accompanying drawings, which are included to provide a further understanding of the disclosure and are incorporated in and constitute a part of this application, illustrate embodiment(s) of the disclosure and together with the description serve to explain the principle of the disclosure. In the drawings:

FIG. 1 is a diagram comparing vehicle-to-everything (V2X) communication based on pre-new radio access technology (pre-NR) with V2X communication based on NR;
FIG. 2 is a diagram illustrating the structure of a long term evolution (LTE) system according to an embodiment of the present disclosure;
FIG. 3 is a diagram illustrating user-plane and control-plane radio protocol architectures according to an embodiment of the present disclosure;
FIG. 4 is a diagram illustrating the structure of an NR system according to an embodiment of the present disclosure;
FIG. 5 is a diagram illustrating functional split between a next generation radio access network (NG-RAN) and a 5th generation core network (5GC) according to an embodiment of the present disclosure;
FIG. 6 is a diagram illustrating the structure of an NR radio frame to which embodiment(s) of the present disclosure is applicable;
FIG. 7 is a diagram illustrating a slot structure of an NR frame according to an embodiment of the present disclosure;
FIG. 8 is a diagram illustrating radio protocol architectures for sidelink (SL) communication according to an embodiment of the present disclosure;
FIG. 9 is a diagram illustrating radio protocol architectures for SL communication according to an embodiment of the present disclosure;
FIG. 10 is a diagram illustrating a procedure for performing V2X or SL communication by a UE according to a transmission mode;

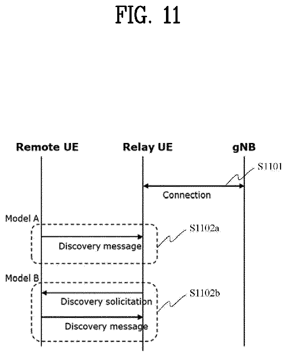

FIG. 11 and FIG. 12 are diagrams to describe embodiment(s); and
FIGS. 13 to 19 are diagrams illustrating various devices to which embodiment(s) are applicable.

## BEST MODE

In various embodiments of the present disclosure, "/" and "," should be interpreted as "and/or". For example, "A/B" may mean "A and/or B". Further, "A, B" may mean "A and/or B". Further, "A/B/C" may mean "at least one of A, B and/or C". Further, "A, B, C" may mean "at least one of A, B and/or C".

In various embodiments of the present disclosure, "or" should be interpreted as "and/or". For example, "A or B" may include "only A", "only B", and/or "both A and B". In other words, "or" should be interpreted as "additionally or alternatively".

Techniques described herein may be used in various wireless access systems such as code division multiple access (CDMA), frequency division multiple access (FDMA), time division multiple access (TDMA), orthogonal frequency division multiple access (OFDMA), single carrier-frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, evolved-UTRA (E-UTRA), or the like. IEEE 802.16m is an evolution of IEEE 802.16e, offering backward compatibility with an IRRR 802.16e-based system. UTRA is a part of universal mobile telecommunications system (UMTS). 3rd generation partnership project (3GPP) long term evolution (LTE) is a part of evolved UMTS (E-UMTS) using evolved UTRA (E-UTRA). 3GPP LTE employs OFDMA for downlink (DL) and SC-FDMA for uplink (UL). LTE-advanced (LTE-A) is an evolution of 3GPP LTE.

A successor to LTE-A, 5th generation (5G) new radio access technology (NR) is a new clean-state mobile communication system characterized by high performance, low latency, and high availability. 5G NR may use all available spectral resources including a low frequency band below 1 GHz, an intermediate frequency band between 1 GHz and 10 GHz, and a high frequency (millimeter) band of 24 GHz or above.

While the following description is given mainly in the context of LTE-A or 5G NR for the clarity of description, the technical idea of an embodiment of the present disclosure is not limited thereto.

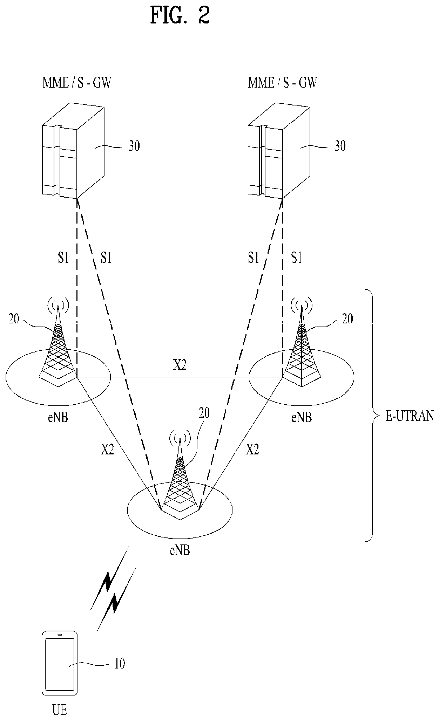

FIG. 2 illustrates the structure of an LTE system according to an embodiment of the present disclosure. This may also be called an evolved UMTS terrestrial radio access network (E-UTRAN) or LTE/LTE-A system.

Referring to FIG. 2, the E-UTRAN includes evolved Node Bs (eNBs) 20 which provide a control plane and a user plane to UEs 10. A UE 10 may be fixed or mobile, and may also be referred to as a mobile station (MS), user terminal (UT), subscriber station (SS), mobile terminal (MT), or wireless device. An eNB 20 is a fixed station communication with the UE 10 and may also be referred to as a base station (BS), a base transceiver system (BTS), or an access point.

eNBs 20 may be connected to each other via an X2 interface. An eNB 20 is connected to an evolved packet core (EPC) 39 via an S 1 interface. More specifically, the eNB 20 is connected to a mobility management entity (MME) via an S 1-MME interface and to a serving gateway (S-GW) via an S 1-U interface.

The EPC 30 includes an MME, an S-GW, and a packet data network-gateway (P-GW). The MME has access information or capability information about UEs, which are mainly used for mobility management of the UEs. The S-GW is a gateway having the E-UTRAN as an end point, and the P-GW is a gateway having a packet data network (PDN) as an end point.

Based on the lowest three layers of the open system interconnection (OSI) reference model known in communication systems, the radio protocol stack between a UE and a network may be divided into Layer 1 (L1), Layer 2 (L2) and Layer 3 (L3). These layers are defined in pairs between a UE and an Evolved UTRAN (E-UTRAN), for data transmission via the Uu interface. The physical (PHY) layer at L1 provides an information transfer service on physical channels. The radio resource control (RRC) layer at L3 functions to control radio resources between the UE and the network. For this purpose, the RRC layer exchanges RRC messages between the UE and an eNB.

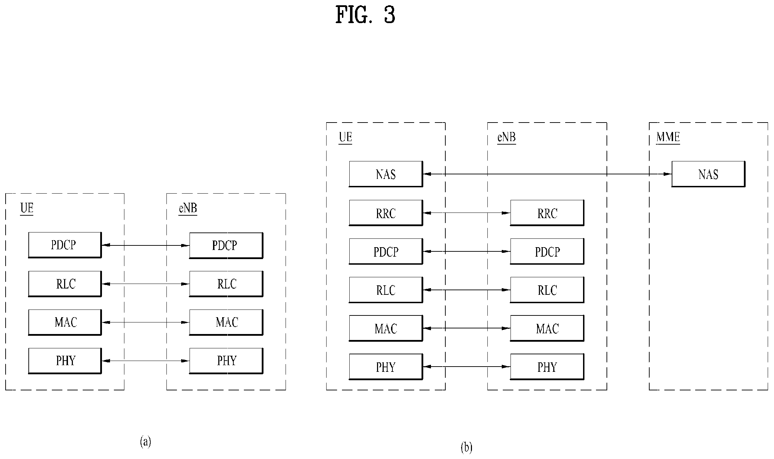

FIG. 3(a) illustrates a user-plane radio protocol architecture according to an embodiment of the disclosure.

FIG. 3(b) illustrates a control-plane radio protocol architecture according to an embodiment of the disclosure. A user plane is a protocol stack for user data transmission, and a control plane is a protocol stack for control signal transmission.

Referring to FIGS. 3(a) and 3(b), the PHY layer provides an information transfer service to its higher layer on physical channels. The PHY layer is connected to the medium access control (MAC) layer through transport channels and data is transferred between the MAC layer and the PHY layer on the transport channels. The transport channels are divided according to features with which data is transmitted via a radio interface.

Data is transmitted on physical channels between different PHY layers, that is, the PHY layers of a transmitter and a receiver. The physical channels may be modulated in orthogonal frequency division multiplexing (OFDM) and use time and frequencies as radio resources.

The MAC layer provides services to a higher layer, radio link control (RLC) on logical channels. The MAC layer provides a function of mapping from a plurality of logical channels to a plurality of transport channels. Further, the MAC layer provides a logical channel multiplexing function by mapping a plurality of logical channels to a single transport channel. A MAC sublayer provides a data transmission service on the logical channels.

The RLC layer performs concatenation, segmentation, and reassembly for RLC serving data units (SDUs). In order to guarantee various quality of service (QoS) requirements of each radio bearer (RB), the RLC layer provides three operation modes, transparent mode (TM), unacknowledged mode (UM), and acknowledged Mode (AM). An AM RLC provides error correction through automatic repeat request (ARQ).

The RRC layer is defined only in the control plane and controls logical channels, transport channels, and physical channels in relation to configuration, reconfiguration, and release of RBs. An RB refers to a logical path provided by L1 (the PHY layer) and L2 (the MAC layer, the RLC layer, and the packet data convergence protocol (PDCP) layer), for data transmission between the UE and the network.

The user-plane functions of the PDCP layer include user data transmission, header compression, and ciphering. The control-plane functions of the PDCP layer include control-plane data transmission and ciphering/integrity protection.

RB establishment amounts to a process of defining radio protocol layers and channel features and configuring specific parameters and operation methods in order to provide a specific service. RBs may be classified into two types, signaling radio bearer (SRB) and data radio bearer (DRB). The SRB is used as a path in which an RRC message is transmitted on the control plane, whereas the DRB is used as a path in which user data is transmitted on the user plane.

Once an RRC connection is established between the RRC layer of the UE and the RRC layer of the E-UTRAN, the UE is placed in RRC_CONNECTED state, and otherwise, the UE is placed in RRC_IDLE state. In NR, RRC_INACTIVE state is additionally defined. A UE in the RRC_INACTIVE state may maintain a connection to a core network, while releasing a connection from an eNB.

DL transport channels carrying data from the network to the UE include a broadcast channel (BCH) on which system information is transmitted and a DL shared channel (DL SCH) on which user traffic or a control message is transmitted. Traffic or a control message of a DL multicast or broadcast service may be transmitted on the DL-SCH or a DL multicast channel (DL MCH). UL transport channels carrying data from the UE to the network include a random access channel (RACH) on which an initial control message is transmitted and an UL shared channel (UL SCH) on which user traffic or a control message is transmitted.

The logical channels which are above and mapped to the transport channels include a broadcast control channel (BCCH), a paging control channel (PCCH), a common control channel (CCCH), a multicast control channel (MCCH), and a multicast traffic channel (MTCH).

A physical channel includes a plurality of OFDM symbol in the time domain by a plurality of subcarriers in the frequency domain. One subframe includes a plurality of OFDM symbols in the time domain. An RB is a resource allocation unit defined by a plurality of OFDM symbols by a plurality of subcarriers. Further, each subframe may use specific subcarriers of specific OFDM symbols (e.g., the first OFDM symbol) in a corresponding subframe for a physical DL control channel (PDCCH), that is, an L1/L2 control channel. A transmission time interval (TTI) is a unit time for subframe transmission.

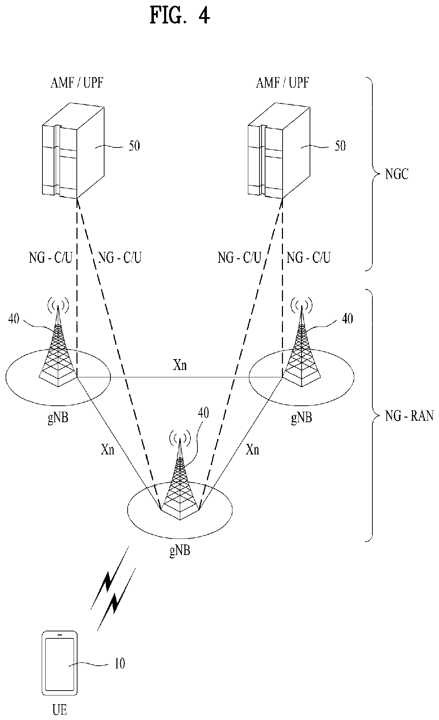

FIG. 4 illustrates the structure of an NR system according to an embodiment of the present disclosure.

Referring to FIG. 4, a next generation radio access network (NG-RAN) may include a next generation Node B (gNB) and/or an eNB, which provides user-plane and control-plane protocol termination to a UE. In FIG. 4, the NG-RAN is shown as including only gNBs, by way of example. A gNB and an eNB are connected to each other via an Xn interface. The gNB and the eNB are connected to a 5G core network (5GC) via an NG interface. More specifically, the gNB and the eNB are connected to an access and mobility management function (AMF) via an NG-C interface and to a user plane function (UPF) via an NG-U interface.

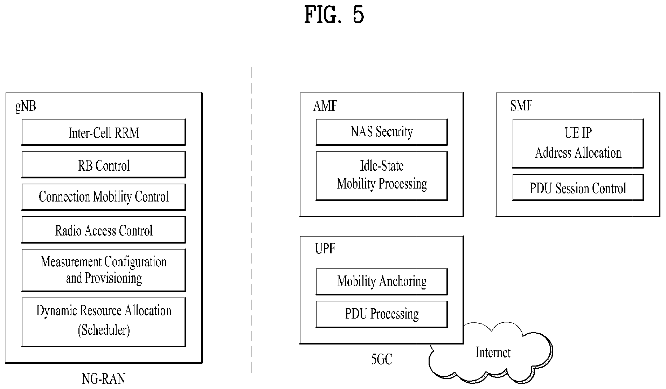

FIG. 5 illustrates functional split between the NG-RAN and the 5GC according to an embodiment of the present disclosure.

Referring to FIG. 5, a gNB may provide functions including inter-cell radio resource management (RRM), radio admission control, measurement configuration and provision, and dynamic resource allocation. The AMF may provide functions such as non-access stratum (NAS) security and idle-state mobility processing. The UPF may provide functions including mobility anchoring and protocol data unit (PDU) processing. A session management function (SMF) may provide functions including UE Internet protocol (IP) address allocation and PDU session control.

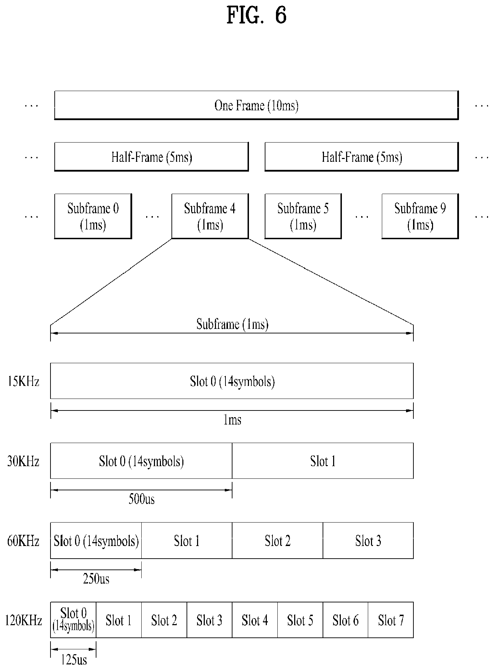

FIG. 6 illustrates a radio frame structure in NR, to which embodiment(s) of the present disclosure is applicable.

Referring to FIG. 6, a radio frame may be used for UL transmission and DL transmission in NR. A radio frame is 10ms in length, and may be defined by two 5-ms half-frames. An HF may include five 1-ms subframes. A subframe may be divided into one or more slots, and the number of slots in an SF may be determined according to a subcarrier spacing (SCS). Each slot may include 12 or 14 OFDM(A) symbols according to a cyclic prefix (CP).

In a normal CP (NCP) case, each slot may include 14 symbols, whereas in an extended CP (ECP) case, each slot may include 12 symbols. Herein, a symbol may be an OFDM symbol (or CP-OFDM symbol) or an SC-FDMA symbol (or DFT-s-OFDM symbol).

Table 1 below lists the number of symbols per slot ($N^{slot}_{symb}$), the number of slots per frame ($N^{frame,u}_{slot}$), and the number of slots per subframe ($N^{subframe,u}_{slot}$) according to an SCS configuration $\mu$ in the NCP case.

[Table 1]

| SCS (15*2u) | $N^{slot}_{symb}$ | $N^{frame,u}_{slot}$ | $N^{subframe,u}_{slot}$ |
|---|---|---|---|
| 15 kHz (u=0) | 14 | 10 | 1 |
| 30 kHz (u=1) | 14 | 20 | 2 |
| 60 kHz (u=2) | 14 | 40 | 4 |
| 120 kHz (u=3) | 14 | 80 | 8 |
| 240 kHz (u=4) | 14 | 160 | 16 |

Table 2 below lists the number of symbols per slot, the number of slots per frame, and the number of slots per subframe according to an SCS in the ECP case.

[Table 2]

| SCS (15*2^u) | $N^{slot}_{symb}$ | $N^{frame,u}_{slot}$ | $N^{subframe,u}_{slot}$ |
|---|---|---|---|
| 60 kHz (u=2) | 12 | 40 | 4 |

In the NR system, different OFDM(A) numerologies (e.g., SCSs, CP lengths, and so on) may be configured for a plurality of cells aggregated for one UE. Accordingly, the (absolute time) duration of a time resource including the same number of symbols (e.g., a subframe, slot, or TTI) (collectively referred to as a time unit (TU) for convenience) may be configured to be different for the aggregated cells.

In NR, various numerologies or SCSs may be supported to support various 5G services. For example, with an SCS of 15 kHz, a wide area in traditional cellular bands may be supported, while with an SCS of 30/60 kHz, a dense urban area, a lower latency, and a wide carrier bandwidth may be supported. With an SCS of 60 kHz or higher, a bandwidth larger than 24.25 GHz may be supported to overcome phase noise.

An NR frequency band may be defined by two types of frequency ranges, FR1 and FR2. The numerals in each frequency range may be changed. For example, the two types of frequency ranges may be given in [Table 3]. In the NR system, FR1 may be a "sub 6 GHz range" and FR2 may be an "above 6 GHz range" called millimeter wave (mmW).

[Table 3]

| Frequency Range designation | Corresponding frequency range | Subcarrier Spacing (SCS) |
|---|---|---|
| FR1 | 450 MHz - 6000 MHz | 15, 30, 60 kHz |
| FR2 | 24250 MHz - 52600 MHz | 60, 120, 240 kHz |

As mentioned above, the numerals in a frequency range may be changed in the NR system. For example, FR1 may range from 410 MHz to 7125 MHz as listed in [Table 4]. That is, FR1 may include a frequency band of 6 GHz (or 5850, 5900, and 5925 MHz) or above. For example, the frequency band of 6 GHz (or 5850, 5900, and 5925 MHz) or above may include an unlicensed band. The unlicensed band may be used for various purposes, for example, vehicle communication (e.g., autonomous driving).

[Table 4]

| Frequency Range designation | Corresponding frequency range | Subcarrier Spacing (SCS) |
|---|---|---|
| FR1 | 410 MHz - 7125 MHz | 15, 30, 60 kHz |
| FR2 | 24250 MHz - 52600 MHz | 60, 120, 240 kHz |

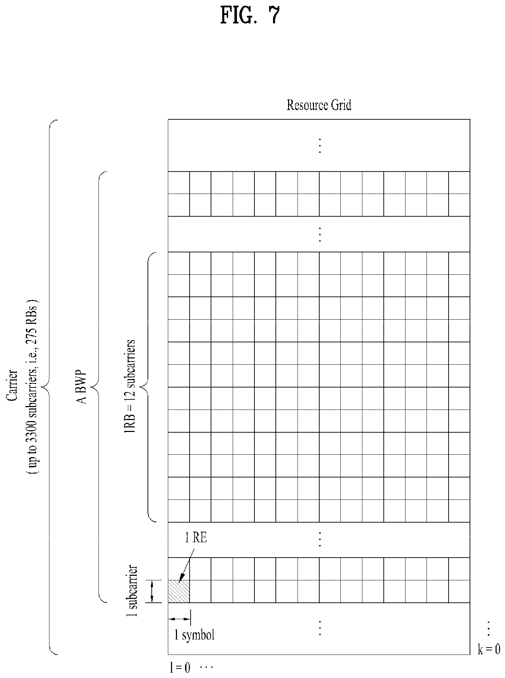

FIG. 7 illustrates a slot structure in an NR frame according to an embodiment of the present disclosure.

Referring to FIG. 7, a slot includes a plurality of symbols in the time domain. For example, one slot may include 14 symbols in an NCP case and 12 symbols in an ECP case. Alternatively, one slot may include 7 symbols in an NCP case and 6 symbols in an ECP case.

A carrier includes a plurality of subcarriers in the frequency domain. An RB may be defined by a plurality of (e.g., 12) consecutive subcarriers in the frequency domain. A bandwidth part (BWP) may be defined by a plurality of consecutive (physical) RBs ((P)RBs) in the frequency domain and correspond to one numerology (e.g., SCS, CP length, or the like). A carrier may include up to N (e.g., 5) BWPs. Data communication may be conducted in an activated BWP. Each element may be referred to as a resource element (RE) in a resource grid, to which one complex symbol may be mapped.

A radio interface between UEs or a radio interface between a UE and a network may include L1, L2, and L3. In various embodiments of the present disclosure, L1 may refer to the PHY layer. For example, L2 may refer to at least one of the MAC layer, the RLC layer, the PDCP layer, or the SDAP layer. For example, L3 may refer to the RRC layer.

Now, a description will be given of sidelink (SL) communication.

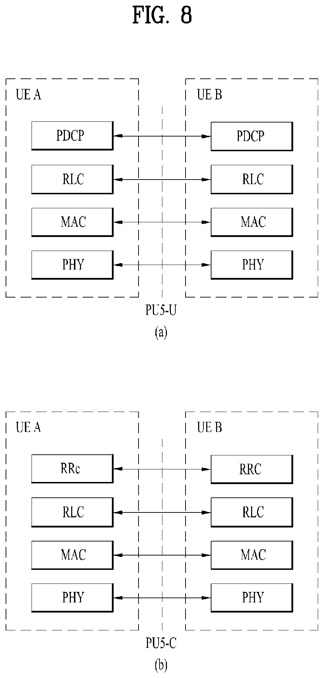

FIG. 8 illustrates a radio protocol architecture for SL communication according to an embodiment of the present disclosure. Specifically, FIG. 8(a) illustrates a user-plane protocol stack in LTE, and FIG. 8(b) illustrates a control-plane protocol stack in LTE.

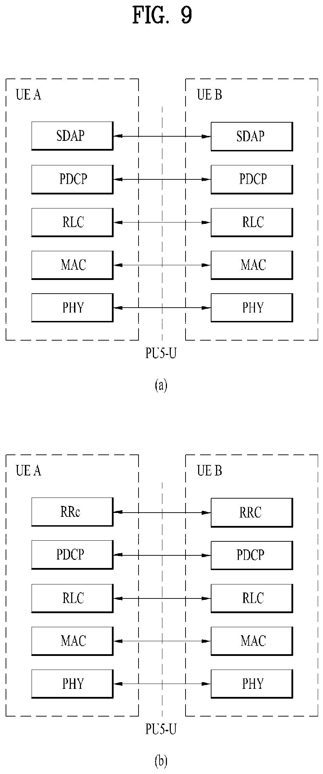

FIG. 9 illustrates a radio protocol architecture for SL communication according to an embodiment of the present disclosure. Specifically, FIG. 9(a) illustrates a user-plane protocol stack in NR, and FIG. 9(b) illustrates a control-plane protocol stack in NR.

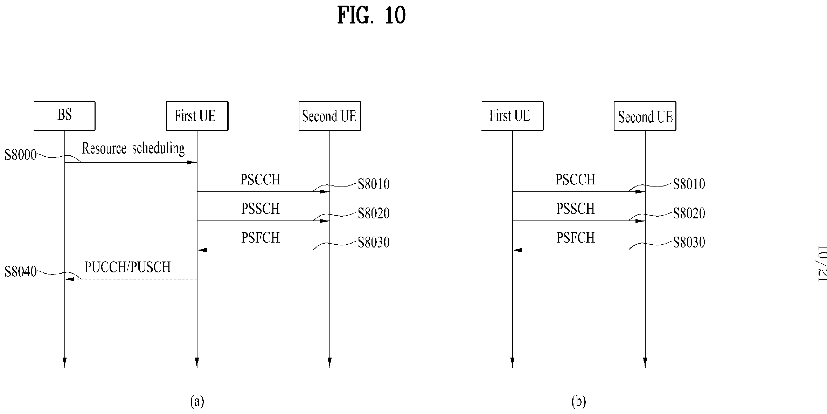

FIG. 10 illustrates a procedure of performing V2X or SL communication by a UE depending on a transmission mode according to an embodiment of the present disclosure. The embodiemnt of FIG. 10 may be combined with various embodiemnts of the present disclosure. In various embodiments of the present disclosure, a transmission mode may be referred to as a mode or a resource allocation mode. For the convenience of the following description, a transmission mode in LTE may be referred to as an LTE transmission mode, and a transmission mode in NR may be referred to as an NR resource allocation mode.

For example, FIG. 10(a) illustrates a UE operation related to LTE transmission mode 1 or LTE transmission mode 3. Alternatively, for example, FIG. 10(a) illustrates a UE operation related to NR resource allocation mode 1. For example, LTE transmission mode 1 may apply to general SL communication, and LTE transmission mode 3 may apply to V2X communication.

For example, FIG. 10 (b) illustrates a UE operation related to LTE transmission mode 2 or LTE transmission mode 4. Alternatively, for example, FIG. 10 (b) illustrates a UE operation related to NR resource allocation mode 2.

Referring to FIG. 10(a), in LTE transmission mode 1, LTE transmission mode 3, or NR resource allocation mode 1, a BS may schedule an SL resource to be used for SL transmission by a UE. For example, in step S8000, the BS may transmit information related to an SL resource and/or information related to a UE resoruce to a first UE. For exmaple, the UL resource may include a physical uplicnk control channel (PUCCH) resource and/or a physical uplink shared channel (PUSCH) resource. For exmaple, the UL resource may be a resource to report SL HARQ feedback to the BS.

For example, the first UE may receive information related to a Dynamic Grant (DG) resource and/or information related to a Configured Grant (CG) resource from the BS. For example, the CG resource may include a CG type 1 resource or a CG type 2 resource. In the present specification, the DG resource may be a resource that the BS configures/allocates to the first UE in Downlink Control Information (DCI). In the present specification, the CG resource may be a (periodic) resource configured/allocated by the BS to the first UE in DCI and/or an RRC message. For example, for the CG type 1 resource, the BS may transmit an RRC message including information related to the CG resource to the first UE. For example, for the CG type 2 resource, the BS may transmit an RRC message including information related to the CG resource to the first UE, and the BS may transmit DCI related to activation or release of the CG resource to the first UE.

In step S8010, the first UE may transmit a physical sidelink control channel (PSCCH) (e.g., Sidelink Control Information (SCI) or 1st-stage SCI) to a second UE based on the resource scheduling. In step S8020, the first UE may transmit a physical sidelink shared channel (PSSCH) (e.g., 2nd-stage SCI, MAC PDU, data, etc.) related to the PSCCH to the second UE. In step S8030, the first UE may receive a physical sidelink feedback channel (PSFCH) related to the PSCCH/PSSCH from the second UE. For example, HARQ feedback information (e.g., NACK information or ACK information) may be received from the second UE over the PSFCH. In step S8040, the first UE may transmit/report HARQ feedback information to the BS over a PUCCH or PUSCH. For example, the HARQ feedback information reported to the BS may include information generated by the first UE based on HARQ feedback information received from the second UE. For example, the HARQ feedback information reported to the BS may include information generated by the first UE according to a predetermined rule. For example, the DCI may be DCI for scheduling of SL. For example, the format of the DCI may include DCI format 3_0 or DCI format 3_1. Table 5 shows one example of DCI for scheduling of SL.

[Table 5]

| 7.3.1.4.1 | Format 3_0 |
|---|---|
| DCI format 3_0 is used for scheduling of NR PSCCH and NR PSSCH in one cell. | |

(continued)

| 7.3.1.4.1 | Format 3_0 |
|---|---|

The following information is transmitted by means of the DCI format 3_0 with CRC scrambled by SL-RNTI or SL-CS-RNTI:

- Resource pool index - $\lceil \log_2 I \rceil$ bits, where $I$ is the number of resource pools for transmission configured by the higher layer parameter *sl-TxPoolScheduling.*

- Time gap - 3 bits determined by higher layer parameter *sl-DCI-ToSL-Trans,* as defined in clause 8.1.2.1 of [6, TS 38.214]

- HARQ process number - 4 bits.

- New data indicator - 1 bit.

- Lowest index of the subchannel allocation to the initial transmission - $\lceil \log_2(N_{\text{subChannel}}^{\text{SL}}) \rceil$ bits as defined in clause 8.1.2.2 of [6, TS 38.214]

- SCI format 1-A fields according to clause 8.3.1.1:

      - Frequency resource assignment.

      - Time resource assignment.

- PSFCH-to-HARQ feedback timing indicator - $\lceil \log_2 N_{\text{fb\_timing}} \rceil$ bits, where $N_{\text{fb\_timing}}$ is the number of entries in the higher layer parameter *sl-PSFCH-ToPUCCH,* as defined in clause 16.5 of [5, TS 38.213]

- PUCCH resource indicator - 3 bits as defined in clause 16.5 of [5, TS 38.213].

- Configuration index - 0 bit if the UE is not configured to monitor DCI format 3_0 with CRC scrambled by SL-CS-RNTI; otherwise 3 bits as defined in clause 8.1.2 of [6, TS 38.214]. If the UE is configured to monitor DCI format 3_0 with CRC scrambled by SL-CS-RNTI, this field is reserved for DCI format 3_0 with CRC scrambled by SL-RNTI.

- Counter sidelink assignment index - 2 bits

      - 2 bits as defined in clause 16.5.2 of [5, TS 38.213] if the UE is configured with *pdsch-HARQ-ACK-Codebook = dynamic*

      - 2 bits as defined in clause 16.5.1 of [5, TS 38.213] if the UE is configured with *pdsch-HARQ-ACK-Codebook = semi-static*

- Padding bits, if required

If multiple transmit resource pools are provided in *sl-TxPoolScheduling,* zeros shall be appended to the DCI format 3_0 until the payload size is equal to the size of a DCI format 3_0 given by a configuration of the transmit resource pool resulting in the largest number of information bits for DCI format 3_0.

If the UE is configured to monitor DCI format 3_1 and the number of information bits in DCI format 3_0 is less than the payload of DCI format 3_1, zeros shall be appended to DCI format 3_0 until the payload size equals that of DCI format 3_1.

| 7.3.1.4.2 | Format 3_1 |
|---|---|

DCI format 3_1 is used for scheduling of LTE PSCCH and LTE PSSCH in one cell.

The following information is transmitted by means of the DCI format 3_1 with CRC scrambled by SL Semi-Persistent Scheduling V-RNTI:

- Timing offset - 3 bits determined by higher layer parameter *sl-TimeOffsetEUTRA-List,* as defined in clause 16.6 of [5, TS 38.213]

- Carrier indicator -3 bits as defined in 5.3.3.1.9A of [11, TS 36.212].

- Lowest index of the subchannel allocation to the initial transmission - $\lceil \log_2(N_{\text{subchannel}}^{\text{SL}}) \rceil$ bits as defined in 5.3.3.1.9A of [11, TS 36.212].

- Frequency resource location of initial transmission and retransmission, as defined in 5.3.3.1.9A of [11, TS 36.212]

- Time gap between initial transmission and retransmission, as defined in 5.3.3.1.9A of [11, TS 36.212]

(continued)

| 7.3.1.4.2 | Format 3_1 |
|---|---|
| - | SL index - 2 bits as defined in 5.3.3.1.9A of [11, TS 36.212] |
| - | SL SPS configuration index - 3 bits as defined in clause 5.3.3.1.9A of [11, TS 36.212]. |
| | - Activation/release indication - 1 bit as defined in clause 5.3.3.1.9A of [11, TS 36.212]. |

Referring to FIG. 10(b), for LTE transmission mode 2, LTE transmission mode 4, or NR resource allocation mode 2, a UE may determine an SL transmission resource from among SL resources configured by a BS/network or preconfigured SL resources. For example, the configured SL resources or preconfigured SL resources may be a resource pool. For example, the UE may autonomously select or schedule resources for SL transmission. For example, the UE may perform SL communication by selecting a resource by itself within a configured resource pool. For example, the UE may perform sensing and resource (re)selection procedures to select a resource by itself within a selection window. For example, the sensing may be performed in unit of a sub-channel. For example, in step S8010, the first UE having self-selected a resource in the resource pool may transmit a PSCCH (e.g., Sidelink Control Information (SCI) or 1st-stage SCI) to the second UE using the resource. In step S8020, the first UE may transmit a PSSCH (e.g., 2nd-stage SCI, MAC PDU, data, etc.) related to the PSCCH to the second UE. In step S8030, the first UE may receive a PSFCH related to the PSCCH/PSSCH from the second UE.

Referring to FIG. 10(a) or FIG. 10(b), for example, the first UE may transmit the SCI to the second UE on the PSCCH. Alternatively, for example, the first UE may transmit two consecutive SCIs (e.g., two-stage SCI) to the second UE on the PSCCH and/or PSSCH. In this case, the second UE may decode the two consecutive SCIs (e.g., two-stage SCI) to receive the PSSCH from the first UE. In the present specification, the SCI transmitted on the PSCCH may be referred to as 1st SCI, 1st-stage SCI, or a 1st-stage SCI format, and the SCI transmitted on the PSSCH may be referred to as 2nd SCI, 2nd SCI, or a 2nd-stage SCI format. For example, the 1st-stage SCI format may include SCI format 1-A, and the 2nd-stage SCI format may include SCI format 2-A and/or SCI format 2-B. Table 6 shows one example of a 1st-stage SCI format.

[Table 6]

8.3.1.1 SCI format 1-A

SCI format 1-A is used for the scheduling of PSSCH and 2nd-stage-SCI on PSSCH

The following information is transmitted by means of the SCI format 1-A:

- Priority - 3 bits as specified in clause 5.4.3.3 of [12, TS 23.287] and clause 5.22.1.3.1 of [8, TS 38.321]. Value '000' of Priority field corresponds to priority value '1', value '001' of Priority field corresponds to priority value '2', and so on.

- Frequency resource assignment - $\left\lceil \log_2 \left( \frac{N_{\text{subChannel}}^{\text{SL}} \left( N_{\text{subChannel}}^{\text{SL}} + 1 \right)}{2} \right) \right\rceil$ bits when the value of the higher layer parameter *sl-MaxNumPerReserve* is configured to 2; otherwise

bits when the value of the higher layer parameter *sl-MaxNumPerReserve* is configured to 3, as defined in clause 8.1.5 of [6, TS 38.214].

- Time resource assignment - 5 bits when the value of the higher layer parameter *sl-MaxNumPerReserve* is configured to 2; otherwise 9 bits when the value of the higher layer parameter *sl-MaxNumPerReserve* is configured to 3, as defined in clause 8.1.5 of [6, TS 38.214].

- Resource reservation period - $\left\lceil \log_2 N_{\text{rsv\_period}} \right\rceil$ bits as defined in clause 16.4 of [5, TS 38.213], where $N_{\text{rsv\_period}}$ is the number of entries in the higher layer parameter *sl-ResourceReservePeriodList,* if higher layer parameter *sl-MultiReserveResource* is configured; 0 bit otherwise.

(continued)

8.3.1.1 SCI format 1-A

$$\left\lceil \log_2 \left( \frac{N_{\text{subChannel}}^{\text{SL}} \left( N_{\text{subChannel}}^{\text{SL}} + 1 \right) \left( 2 N_{\text{subChannel}}^{\text{SL}} + 1 \right)}{6} \right) \right\rceil$$ - DMRS pattern -

$\left\lceil \log_2 N_{\text{pattern}} \right\rceil$ bits as defined in clause 8.4.1.1.2 of [4, TS 38.211], where $N_{\text{pattern}}$ is the number of DMRS patterns configured by higher layer parameter *sl-PSSCH-DMRS-TimePatternList*.

- 2nd-stage SCI format - 2 bits as defined in Table 8.3.1.1-1.
- Beta_offset indicator - 2 bits as provided by higher layer parameter *sl-BetaOffsets2ndSCI* and Table 8.3.1.1-2.
- Number of DMRS port - 1 bit as defined in Table 8.3.1.1-3.
- Modulation and coding scheme - 5 bits as defined in clause 8.1.3 of [6, TS 38.214].
- Additional MCS table indicator - as defined in clause 8.1.3.1 of [6, TS 38.214]: 1 bit if one MCS table is configured by higher layer parameter *sl-Additional-MCS-Table*; 2 bits if two MCS tables are configured by higher layer parameter *sl-Additional-MCS-Table*; 0 bit otherwise.
- PSFCH overhead indication - 1 bit as defined clause 8.1.3.2 of [6, TS 38.214] if higher layer parameter *sl-PSFCH-Period* = 2 or 4; 0 bit otherwise.
- Reserved - a number of bits as determined by higher layer parameter *sl-NumReservedBits,* with value set to zero.

Table 7 shows one example of a 2nd-stage SCI format.

[Table 7]

8.4 Sidelink control information on PSSCH

SCI carried on PSSCH is a 2nd-stage SCI, which transports sidelink scheduling information.

8.4.1 2nd-stage SCI formats

The fields defined in each of the 2nd-stage SCI formats below are mapped to the information bits $a_0$ to $a_{A-1}$ as follows:

Each field is mapped in the order in which it appears in the description, with the first field mapped to the lowest order information bit $a_0$ and each successive field mapped to higher order information bits. The most significant bit of each field is mapped to the lowest order information bit for that field, e.g. the most significant bit of the first field is mapped to $a_0$.

8.4.1.1 SCI format 2-A

SCI format 2-A is used for the decoding of PSSCH, with HARQ operation when HARQ-ACK information includes ACK or NACK, when HARQ-ACK information includes only NACK, or when there is no feedback of HARQ-ACK information.

The following information is transmitted by means of the SCI format 2-A:
- HARQ process number - 4 bits.
- New data indicator - 1 bit.
- Redundancy version - 2 bits as defined in Table 7.3.1.1.1-2.
- Source ID - 8 bits as defined in clause 8.1 of [6, TS 38.214].
- Destination ID - 16 bits as defined in clause 8.1 of [6, TS 38.214].
- HARQ feedback enabled/disabled indicator - 1 bit as defined in clause 16.3 of [5, TS 38.213].
- Cast type indicator - 2 bits as defined in Table 8.4.1.1-1 and in clause 8.1 of [6, TS 38.214].
- CSI request - 1 bit as defined in clause 8.2.1 of [6, TS 38.214] and in clause 8.1 of [6, TS 38.214].

Referring to FIG. 10(a) or FIG. 10(b), in step S8030, the first UE may receive the PSFCH based on Table 8. For example, the first UE and the second UE may determine a PSFCH resource based on Table 8, and the second UE may transmit HARQ feedback to the first UE using the PSFCH resource.

[Table 8]

16.3 UE procedure for reporting HARQ-ACK on sidelink

A UE can be indicated by an SCI format scheduling a PSSCH reception to transmit a PSFCH with HARQ-ACK information in response to the PSSCH reception. The UE provides HARQ-ACK information that includes ACK or NACK, or only NACK.

A UE can be provided, by *sl-PSFCH-Period,* a number of slots in a resource pool for a period of PSFCH transmission occasion resources. If the number is zero, PSFCH transmissions from the UE in the resource pool are disabled.

A UE expects that a slot $t'^{SL}_k$ ($0 \le k < T'_{max}$) has a PSFCH transmission occasion resource if $k$ mod $N^{\mathrm{PSFCH}}_{\mathrm{PSSCH}} = 0$, where $t'^{SL}_k$ is defined in [6, TS 38.214], and $T'_{max}$ is a

number of slots that belong to the resource pool within 10240 msec according to [6, TS 38.214], and $N^{\mathrm{PSFCH}}_{\mathrm{PSSCH}}$ is provided by *sl-PSFCH-Period.*

A UE may be indicated by higher layers to not transmit a PSFCH in response to a PSSCH reception [11, TS 38.321]. If a UE receives a PSSCH in a resource pool and the HARQ feedback enabled/disabled indicator field in an associated SCI format 2-A or a SCI format 2-B has value 1 [5, TS 38.212], the UE provides the HARQ-ACK information in a PSFCH transmission in the resource pool. The UE transmits the PSFCH in a first slot that includes PSFCH resources and is at least a number of slots, provided by *sl-MinTimeGapPSFCH,* of the resource pool after a last slot of the PSSCH reception.

A UE is provided by *sl-PSFCH-RB-Set* a set of $M^{\mathrm{PSFCH}}_{\mathrm{PRB, set}}$ PRBs in a resource pool for PSFCH transmission in a PRB of the resource pool. For a number of $N_{\mathrm{subch}}$ sub-channels for the resource pool, provided by *sl-NumSubchannel,* and a number of PSSCH slots associated with a PSFCH slot that is less than or equal to $N^{\mathrm{PSFCH}}_{\mathrm{PSSCH}}$, the UE allocates the $\left[\left(i + j \cdot N^{\mathrm{PSFCH}}_{\mathrm{PSSCH}}\right) \cdot M^{\mathrm{PSFCH}}_{\mathrm{subch, slot}}, \left(i + 1 + j \cdot N^{\mathrm{PSFCH}}_{\mathrm{PSSCH}}\right) \cdot M^{\mathrm{PSFCH}}_{\mathrm{subch, slot}} - 1\right]$ PRBs from the $M^{\mathrm{PSFCH}}_{\mathrm{PRB, set}}$ PRBs to slot i among the PSSCH slots associated with the PSFCH slot and sub-channel $j$, where $M^{\mathrm{PSFCH}}_{\mathrm{subch, slot}} = M^{\mathrm{PSFCH}}_{\mathrm{PRB, set}}/\left(N_{\mathrm{subch}} \cdot N^{\mathrm{PSFCH}}_{\mathrm{PSSCH}}\right)$, $0 \le i < N^{\mathrm{PSFCH}}_{\mathrm{PSSCH}}$, $0 \le j < N_{\mathrm{subch}}$, and the allocation starts in an ascending order of i and continues in an ascending order of $j$. The UE expects that $M^{\mathrm{PSFCH}}_{\mathrm{PRB, set}}$ is a multiple of $N_{\mathrm{subch}} \cdot N^{\mathrm{PSFCH}}_{\mathrm{PSSCH}}$.

The second OFDM symbol $l'$ of PSFCH transmission in a slot is defined as $l'$ = *sl-StartSymbol* + *sl-LengthSymbols* - 2 .

A UE determines a number of PSFCH resources available for multiplexing HARQ-ACK information in a PSFCH transmission as $R^{\mathrm{PSFCH}}_{\mathrm{PRB, CS}} = N^{\mathrm{PSFCH}}_{\mathrm{type}} \cdot M^{\mathrm{PSFCH}}_{\mathrm{subch, slot}} \cdot N^{\mathrm{PSFCH}}_{\mathrm{CS}}$ PRB, cs type subch, slot CS where $N^{\mathrm{PSFCH}}_{\mathrm{CS}}$ is a number of cyclic shift pairs for the resource pool provided by *sl-NumMuxCS-Pair* and, based on an indication by *sl-PSFCH-CandidateResourceType,*

(continued)

16.3 UE procedure for reporting HARQ-ACK on sidelink
- if *sl-PSFCH-CandidateResourceType* is configured as

*startSubCH,* $N_{\text{type}}^{\text{PSFCH}} = 1$ and the $M_{\text{subch, slot}}^{\text{PSFCH}}$ PRBs are associated with the starting sub-channel of the corresponding PSSCH;
- if *sl-PSFCH-CandidateResourceType* is configured as

*allocSubCH,* $N_{\text{type}}^{\text{PSFCH}} = N_{\text{subch}}^{\text{PSSCH}}$ and the

$N_{\text{subch}}^{\text{PSSCH}} \cdot M_{\text{subch, slot}}^{\text{PSFCH}}$ PRBs are associated with the

$N_{\text{subch}}^{\text{PSSCH}}$ sub-channels of the corresponding PSSCH.

The PSFCH resources are first indexed according to an ascending order of the PRB index, from the

$N_{\text{type}}^{\text{PSFCH}} \cdot M_{\text{subch, slot}}^{\text{PSFCH}}$ PRBs, and then according to an ascending order of the cyclic shift pair index from the

$N_{\text{CS}}^{\text{PSFCH}}$ cyclic shift pairs.

A UE determines an index of a PSFCH resource for a PSFCH transmission in response to a PSSCH reception as

$(P_{\text{ID}} + M_{\text{ID}}) \bmod R_{\text{PRB, CS}}^{\text{PSFCH}}$ where $P_{\text{ID}}$ is a physical layer source ID provided by SCI format 2-A or 2-B [5, TS 38.212] scheduling the PSSCH reception, and $M_{\text{ID}}$ is the identity of the UE receiving the PSSCH as indicated by higher layers if the UE detects a SCI format 2-A with Cast type indicator field value of "01"; otherwise, $M_{\text{ID}}$ is zero.

A UE determines a $m_0$ value, for computing a value of cyclic shift $\alpha$ [4, TS 38.211], from a cyclic shift pair index corresponding to a PSFCH resource index and from

$N_{\text{CS}}^{\text{PSFCH}}$ using Table 16.3-1.

Referring to FIG. 10(a), in step S8040, the first UE may transmit SL HARQ feedback to the BS over the PUCCH and/or PUSCH based on Table 9.

[Table 9]

| 16.5 UE procedure for reporting HARQ-ACK on uplink |
| :-- |
| A UE can be provided PUCCH resources or PUSCH resources [12, TS 38.331] to report HARQ-ACK information that the UE generates based on HARQ-ACK information that the UE obtains from PSFCH receptions, or from absence of PSFCH receptions. The UE reports HARQ-ACK information on the primary cell of the PUCCH group, as described in clause 9, of the cell where the UE monitors PDCCH for detection of DCI format 3_0. |
| For SL configured grant Type 1 or Type 2 PSSCH transmissions by a UE within a time period provided by *sl-PeriodCG,* the UE generates one HARQ-ACK information bit in response to the PSFCH receptions to multiplex in a PUCCH transmission occasion that is after a last time resource, in a set of time resources. |
| For PSSCH transmissions scheduled by a DCI format 3_0, a UE generates HARQ-ACK information in response to PSFCH receptions to multiplex in a PUCCH transmission occasion that is after a last time resource in a set of time resources provided by the DCI format 3_0. |
| From a number of PSFCH reception occasions, the UE generates HARQ-ACK information to report in a PUCCH or PUSCH transmission. The UE can be indicated by a SCI format to perform one of the following and the UE constructs a HARQ-ACK codeword with HARQ-ACK information, when applicable |
|     - for one or more PSFCH reception occasions associated with SCI format 2-A with Cast type indicator field value of "10" |

(continued)

<table>
<tr><td colspan="2">16.5 UE procedure for reporting HARQ-ACK on uplink</td></tr>
<tr><td colspan="2">- generate HARQ-ACK information with same value as a value of HARQ-ACK information the UE determines from the last PSFCH reception from the number of PSFCH reception occasions corresponding to PSSCH transmissions or, if the UE determines that a PSFCH is not received at the last PSFCH reception occasion and ACK is not received in any of previous PSFCH reception occasions, generate NACK</td></tr>
<tr><td colspan="2">- for one or more PSFCH reception occasions associated with SCI format 2-A with Cast type indicator field value of "01"</td></tr>
<tr><td></td><td>- generate ACK if the UE determines ACK from at least one PSFCH reception occasion, from the number of PSFCH reception occasions corresponding to PSSCH transmissions, in PSFCH resources corresponding to every identity $M_{ID}$ of the UEs that the UE expects to receive the PSSCH, as described in clause 16.3; otherwise, generate NACK</td></tr>
<tr><td colspan="2">- for one or more PSFCH reception occasions associated with SCI format 2-B or SCI format 2-A with Cast type indicator field value of "11"</td></tr>
<tr><td></td><td>- generate ACK when the UE determines absence of PSFCH reception for the last PSFCH reception occasion from the number of PSFCH reception occasions corresponding to PSSCH transmissions; otherwise, generate NACK</td></tr>
<tr><td colspan="2">After a UE transmits PSSCHs and receives PSFCHs in corresponding PSFCH resource occasions, the priority value of HARQ-ACK information is same as the priority value of the PSSCH transmissions that is associated with the PSFCH reception occasions providing the HARQ-ACK information.</td></tr>
<tr><td colspan="2">The UE generates a NACK when, due to prioritization, as described in clause 16.2.4, the UE does not receive PSFCH in any PSFCH reception occasion associated with a PSSCH transmission in a resource provided by a DCI format 3_0 or, for a configured grant, in a resource provided in a single period and for which the UE is provided a PUCCH resource to report HARQ-ACK information. The priority value of the NACK is same as the priority value of the PSSCH transmission.</td></tr>
<tr><td colspan="2">The UE generates a NACK when, due to prioritization as described in clause 16.2.4, the UE does not transmit a PSSCH in any of the resources provided by a DCI format 3_0 or, for a configured grant, in any of the resources provided in a single period and for which the UE is provided a PUCCH resource to report HARQ-ACK information. The priority value of the NACK is same as the priority value of the PSSCH that was not transmitted due to prioritization.</td></tr>
<tr><td colspan="2">The UE generates an ACK if the UE does not transmit a PSCCH with a SCI format 1-A scheduling a PSSCH in any of the resources provided by a configured grant in a single period and for which the UE is provided a PUCCH resource to report HARQ-ACK information. The priority value of the ACK is same as the largest priority value among the possible priority values for the configured grant.</td></tr>
</table>

Sidelink (SL) Discontinuous Reception (DRX)

A MAC entity may be configured by an RRC as a DRX function of controlling a PDCCH monitoring activity of a UE for C-RNTI, CI-RNTI, CS-RNTI, INT-RNTI, SFI-RNTI, SP-CSI-RNTI, TPC-PUCCH-RNTI, TPC-PUSCH-RNTI, TPC-SRS-RNTI, AI-RNTI, SL-RNTI, SLCS-RNTI, and SL Semi-Persistent Scheduling V-RNTI of the MAC entity. When using a DRX operation, a MAC entity should monitor PDCCH according to prescribed requirements. When DRX is configured in RRC_CONNECTED, a MAC entity may discontinuously monitor PDCCH for all activated serving cells.
RRC may control a DRX operation by configuring the following parameters.

- drx-onDurationTimer : Duration time upon DRX cycle start
- drx-SlotOffset: Delay before drx-onDurationTimer start
- drx-InactivityTimer: Duration time after PDCCH that indicates new UL or DL transmission for a MAC entity
- drx-RetransmissionTimerDL (per DL HARQ process except for the broadcast process): Maximum duration time until DL retransmission is received

- drx-RetransmissionTimerUL (per UL HARQ process): Maximum time until a grant for retransmission is received
- drx-LongCycleStartOffset: Long DRX cycle and drx-StartOffset that define a subframe in which Long and Short DRX cycles start
- drx-ShortCycle(optional): Short DRX cycle
- drx-ShortCycleTimer(optional): Period for a UE to follow a short CRX cycle
- drx-HARQ-RTT-TimerDL (per DL HARQ process except for the broadcast process): Minimum duration time before DL allocation for HARQ retransmission is predicted by a MAC entity
- drx-HARQ-RTT-TimerUL (per UL HARQ process): Minimum duration time before a UL HARQ retransmission grant is predicted by a MAC entity
- drx-RetransmissionTimerSL (per HARQ process): Maximum period until a grant for SL retransmission is received
- drx-HARQ-RTT-TimerSL (per HARQ process): Minimum duration time before an SL retransmission grant is predicted by a MAC entity
- ps-Wakeup (optional): Configuration for starting drx-on DurationTimer connected when DCP is monitored but not detected
- ps-TransmitOtherPeriodicCSI (optional): Configuration to report a periodic CSI that is not L1-RSRP on PUCCH for a time duration period indicated by drx-onDurationTimer when connected drx-onDurationTimer does not start despite that DCP is configured
- ps-TransmitPeriodicL1-RSRP (optional): Configuration to transmit a periodic CSI that is L1-RSRP on PUCCH for a time indicated by a drx-onDurationTimer when a connected drx-onDurationTimer does not start despite that DCP is configured

A serving cell of a MAC entity may be configured by RRC in two DRX groups having separate DRX parameters. When the RRC does not configure a secondary DRX group, a single DRX group exists only and all serving cells belong to the single DRX group. When two DRX groups are configured, each serving cell is uniquely allocated to each of the two groups. DRX parameters separately configured for each DRX group include drx-onDurationTimer and drx-InactivityTimer. A DRX parameter common to a DRX group is as follows.

drx-onDurationTimer, drx-InactivityTimer.

DRX parameters common to a DRX group are as follows.

drx-SlotOffset, drx-RetransmissionTimerDL, drx-Retrans drx-SlotOffset, drx-RetransmissionTimerDL, drx-RetransmissionTimerUL, drx-LongCycleStartOffset, drx-ShortCycle (optional), drx-ShortCycleTimer (optional), drx-HARQ-RTT-TimerDL, and drx-HARQ-RTT-TimerUL.

For the DRX operation in the prior art, drx-HARQ-RTT-TimerDL, drx-HARQ-RTT-TimerUL, drx-RetransmissionTimerDL, and drx-RetransmissionTimerUL are defined. When the UE performs HARQ retransmission, the UE may be allowed to transition to the sleep mode during an RTT timer (drx-HARQ-RTT-TimerDL, drx-HARQ-RTT-TimerUL, etc.) or maintain the active state during a retransmission timer (drx-RetransmissionTimerDL, drx-RetransmissionTimerUL, etc.)

In addition, for details of SLDRX, SL DRX-related contents of TS 38.321, TS 38.331 and R2-2111419 may be referred to as the related art.

Table 10 below shows disclosed information related to selection and reselection of a sidelink relay UE in 3GPP TS 36.331. The disclosed information in Table 10 is used as the related art of the disclosure, and related necessary details refer to 3GPP TS 36.331.

[Table 10]

| 5.10.11.4 Selection and reselection of sidelink relay UE |
|---|
| A UE capable of sidelink remote UE operation that is configured by upper layers to search for a sidelink relay UE shall: |
|     1> if out of coverage on the frequency used for sidelink communication, as defined in TS 36.304 [4], clause 11.4; or |
|     1> if the serving frequency is used for sidelink communication and the RSRP measurement of the cell on which the UE camps (RRC _IDLE)/ the PCell (RRC_CONNECTED) is below *threshHigh* within *remoteUE-Config* : |
|         2> search for candidate sidelink relay UEs, in accordance with TS 36.133 [16] |
|         2> when evaluating the one or more detected sidelink relay UEs, apply layer 3 filtering as specified in 5.5.3.2 across measurements that concern the same ProSe Relay UE ID and using the *filterCoefficient* in *SystemInformationBlockType19* (in coverage) or the preconfigured *filter Coefficient* as defined in 9.3(out of coverage), before using the SD-RSRP measurement results; |

(continued)

| 5.10.11.4 Selection and reselection of sidelink relay UE |
|---|
| NOTE 1: The details of the interaction with upper layers are up to UE implementation. |
| 2> if the UE does not have a selected sidelink relay UE: |
| 3> select a candidate sidelink relay UE which SD-RSRP exceeds *q-RxLevMin* included in either *reselectionInfoIC* (in coverage) or *reselectionInfoOoC* (out of coverage) by *minHyst;* |
| 2> else if SD-RSRP of the currently selected sidelink relay UE is below *q-RxLevMin* included in either *reselectionInfoIC* (in coverage) or *reselectionInfoOoC* (out of coverage); or if upper layers indicate not to use the currently selected sidelink relay: (i.e. sidelink relay UE reselection): |
| 3> select a candidate sidelink relay UE which SD-RSRP exceeds *q-RxLevMin* included in either *reselectionInfoIC* (in coverage) or *reselectionInfoOoC* (out of coverage) by *minHyst*; |
| 2> else if the UE did not detect any candidate sidelink relay UE which SD-RSRP exceeds *q-RxLevMin* included in either *reselectionInfoIC* (in coverage) or *reselectionInfoOoC* (out of coverage) by *minHyst*: |
| 3> consider no sidelink relay UE to be selected; |
| NOTE 2: The UE may perform sidelink relay UE reselection in a manner resulting in selection of the sidelink relay UE, amongst all candidate sidelink relay UEs meeting higher layer criteria, that has the best radio link quality Further details, including interaction with upper layers, are up to UE implementation. |
| 5.10.11.5 Sidelink remote UE threshold conditions |
| A UE capable of sidelink remote UE operation shall: |
| 1> if the threshold conditions specified in this clause were not met: |
| 2> if *threshHigh* is not included in *remoteUE-Config* within *SystemInformationBlockType19*, or |
| 2> if *threshHigh* is included in *remoteUE-Config* within *SystemInformationBlockType19*; and the RSRP measurement of the PCell, or the cell on which the UE camps, is below *threshHigh* by *hystM$\alpha$x* (also included within *remoteUE-Config*): |
| 3> consider the threshold conditions to be met (entry); |
| 1> else: |
| 2> if *threshHigh* is included in *remoteUE-Config* within *SystemInformationBlockType19;* and the RSRP measurement of the PCell, or the cell on which the UE camps, is above *threshHigh* (also included within *remote UE-Config*): |
| 3> consider the threshold conditions not to be met (leave); |

A relay UE may be selected based on the above description, and this relay UE may perform a relaying operation for services with various different QoSs (reliability, latency, and the like). Therefore, depending on the QoS (and/or type) of the service that each remote UE intends to transmit/receive, the Uu link quality to be had by the relay UE may be different. Alternatively, the corresponding SL quality and Uu link quality may be different to not only the Uu link but also a BS. Therefore, in an embodiment of the present disclosure, a method of selecting a relay by a remote UE according to the quality/QoS/type of a service to be supported/received through the relay UE will be described below.

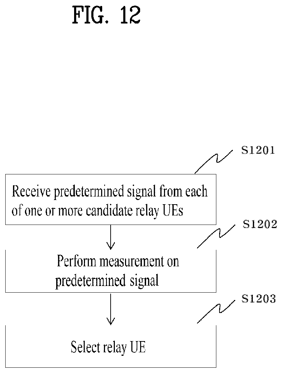

The remove UE according to an embodiment of the present disclosure may receive a predetermined signal from each of one or more candidate relay UEs (S1201 of FIG. 12) and perform measurement on the predetermined signal (S 1202). The remote UE may select a relay UE (S1203).

Here, the predetermined signal may include Uu link threshold-related information of each of the candidate relay UEs, and the remote UE may select the relay UE based on the QoS of the service to be transmitted and received through the relay and the Uu link threshold-related information of each of the candidate relay UEs.

In detail, for selection of the relay UE, the remote UE may determine a candidate relay UE set that includes relay UEs with a Uu link threshold value greater than a first Uu link threshold ('Uu-threshold_Y') related to the QoS and select a relay UE with the highest received signal strength from the candidate relay set. The first Uu link threshold may be different depending on the service. Relay UEs included in the candidate relay UE set may satisfy a second Uu link threshold ('Uu-threshold_X') corresponding to a minimum Uu link signal strength for a relay.

In more detail, when a minimum Uu link signal strength of a relay UE satisfies only the 'Uu-threshold_X', the relay UE may be selected and start a discovery message broadcast procedure. In this case, the 'Uu-threshold_X' may mean a minimum value at which a relay operation is to be performed. A remote UE that receives this selects a relay UE with the highest discovery message signal strength among relay UEs with a Uu link threshold ('Uu-threshold_Y', first Uu link threshold) value or higher, which may vary depending on the service (QoS/type) to be transmitted/received through a relay. That is, the remote UE may preferentially select the relay UE from a sub relay UE set (e.g., set 'B') that satisfies a (pre-)configured threshold according to a QoS/type of a service to be transmitted/received by the remote UE, from a sub relay UE set (set 'B', and in this case, the set 'B' means a relay UE(s) that satisfy the 'Uu-threshold_Y') to be selected among all candidate relay UEs (set 'A', and in this case, the set 'A' means a relay UE(s) that satisfies the 'Uu-threshold_X' (second Uu link threshold), according to the QoS of the service to be transmitted/received through the relay UE.

As such, according to the QoS of a service to be received through a relay UE by a remote UE (or based on a first Uu link threshold configured differently depending on the service), a relay UE may be selected, and thus services that require various QoS may be received without interruption even through the relay UE.

Based on that there is no relay UE included in the candidate relay UE set, the remote UE may select the relay UE with the highest signal strength among relay UEs that satisfy the second Uu link threshold. This may be applied when a remote UE selects one relay UE for transmission/reception of multiple services and uses a threshold of a service with the tightest QoS among the QoSs of multiple services as a standard. Alternatively, when there is no candidate relay UE set with Uu link quality that satisfies the QoS of a transmission/reception service of the remote UE among all relay UE sets, the relay operation may not be performed.

SL-RSRP (SL RSRP between a remote UE and a relay UE) and Uu-RSRP (Uu-RSRP between a gNB and a relay UE) may be differently configured according to the QoS (and/or type) of a service. A service that requires high QoS may be selected only when the SL-RSRP and the Uu-RSRP are equal to or greater than respective (pre-)configured values (SL-RSRP: 'threshold_X1', Uu-RSRP: 'threshold_X2'), and a service that requires low QoS may be selected when the SL-RSRP and the Uu-RSRP are equal to or greater than other respective (pre-)configured values (SL-RSRP: 'threshold_Y1', Uu-RSRP: 'threshold_Y2').

(Alternatively) a remote UE that receives the Uu link RSRP between the relay UE and the gNB may also select a relay UE only when a minimum value is selected from RSRP of a Uu link and a RSRP value of a sidelink and satisfies the QoS of a service to be transmitted/received. The minimum value is selected because the minimum value from the SL-RSRP and the Uu-RSRP is a critical value for determining the link quality of a transmission path when an entire service is transmitted.

A selection range of the relay UE may be advantageously and flexibly determined in relay operations that may have various service requirements.

The above description may be understood as a relay (re)selection method when Uu link signal strength (Uu-RSRP/RSRQ/RSSI) (between the relay UE and the gNB) is included in a discovery message.

In relation to the above description, a remote UE may include at least one processor, and at least one computer memory operatively connected to the at least one processor and configured to store instructions that, when executed, cause the at least one processor to perform operations including receiving a predetermined signal from each of one or more candidate relay UEs, performing measurement on the predetermined signal, and selecting a relay UE, and in this case, the predetermined signal includes Uu link threshold-related information of each of the candidate relay UEs, and the remote UE selects the relay UE based on QoS of a service to be transmitted and received through the relay and the Uu link threshold-related information of each of the candidate relay UE.

In relation to a processor for performing operations for a remote UE, the operations include receiving a predetermined signal from each of one or more candidate relay UEs, performing measurement on the predetermined signal, and selecting a relay UE, and in this case, the predetermined signal includes Uu link threshold-related information of each of the candidate relay UEs, and the remote UE selects the relay UE based on QoS of a service to be transmitted and received through the relay and the Uu link threshold-related information of each of the candidate relay UE.

In relation to a non-volatile computer-readable storage medium for storing at least one computer program including an instruction that, when executed by at least one processor, causes the at least one processor to perform operations for a remote user equipment (UE), the operations include receiving a predetermined signal from each of one or more candidate relay UEs, performing measurement on the predetermined signal, and selecting a relay UE, and in this case, the predetermined signal includes Uu link threshold-related information of each of the candidate relay UEs, and the remote UE selects the relay UE based on QoS of a service to be transmitted and received through the relay and the Uu link threshold-related information of each of the candidate relay UE.

In measurements related to selection of the relay UE, based on the predetermined signal being a discovery message, the remote UE may perform measurement even if only physical layer ID information is successfully decoded among ID information of a physical layer of the discovery message and ID information of a medium access control (MAC) layer. A sidelink control channel (SCI) related to the discovery message may include only a source ID from the source ID and a destination ID. In the case of SL NR, the SCI (e.g., 24 bits allocated for addressing) contains some values of the source ID (e.g., 16 bits) and some values of the destination ID (e.g., 16 bits of source ID, 8 bits of destination ID) and is transmitted. The remaining source and destination ID values are included and transmitted in a MAC layer header (e.g., 8 bits of source ID, 16 bits of destination ID). Therefore, in the case of SL NR, to measure sidelink reference signal received power (SD-RSRP), when the SD-RSRP is measured only for successful decoding of the source/destination ID of the SCI transmitted through the PSCCH (/part of PSSCH) of the physical layer and the source/destination ID of the MAC layer, the SD-RSRP value of the candidate relay UE may be accurately measured To this end, it needs to be known whether a corresponding message is a discovery message, and this may be indicated in a SCI/MAC header or provided through a dedicated logical channel/transmission BER, or the like.

However, in the above embodiment, only the source ID from the source ID and the destination ID is included in the SCI, and the MAC layer may check and measure only an ID of a physical layer without a need for decoding. In this regard, hereinafter, in relation to selection especially, measurement of a relay UE, matters to be considered to measure signal strength (SD-RSRP) of the discovery message when a discovery message is transmitted in a NR SL structure will be described. The following description may be used in combination with the above embodiment related to selection of the relay UE and other embodiments described below, but may also be used independently.

As described above, an addressing method in which, when the message transmitted through SCI indicates discovery (e.g., 1 bit indication), the UE that receives the message measures SD-RSRP for a TB that only succeeded in decoding a physical layer will be described. For example, SCI of a discovery transmission message including only the source ID (e.g., 24 bits) may be allowed to be transmitted. In this case, a counterpart UE that receives this knows that a corresponding TB is a discovery message, and thus even if only the SCI of the physical layer is successfully decoded, SD-RSRP may be measured and used when selecting a relay.

As such, SD-RSRP may be measured without decoding the destination ID, and thus it is advantageous in terms of a measurement speed and a degree of load on a UE that receives the destination ID.

Continuously, when the SL NR allocates a dedicated resource pool for transmitting a discovery message, SD-RSRP may be measured only for successful decoding of the source/destination ID present in the physical layer and the MAC layer as above, however, as in case B above, the addressing method used when transmitting a discovery message may be configured differently from an addressing method used for general data transmission. That is, all messages transmitted to a discovery-only pool are discovery messages, and thus addressing information included in a physical layer when a discovery message is transmitted may be restricted to transmission using SCI by limiting only the source ID (e.g., 24-bit source ID). In this case, the UE that receives the information may measure SD-RSRP and use the same when selecting a relay when only a SCI value of the physical layer is successfully decoded.

In the case of the above descriptions, it may not be possible to measure SD-RSRP only for a specific service because the destination ID is not decoded. However, a discovery message is transmitted to select one relay UE with good signal strength (SD-RSRP) to know the strength of a signal of a counterpart UE, which reaches a subject UE, and to compare the strength of the signal with values transmitted from several other UEs, and thus there may be no special reason to measure differently for each service. In addition, in a relay operation, a higher layer determines which service to relay on, and thus an AS layer only performs a role of quickly and accurately measuring the SD-RSRP value for each candidate relay and informing the higher layer.

Alternatively, in cases in which a higher layer notifies an AS layer of searching for a relay UE only for a specific service, an operation may be restricted to measure SD-RSRP only when decoding both the source ID and destination ID is successful. In other words, when the higher layer notifies the AS layer of the destination ID for a specific service, the AS layer may measure SD-RSRP only for a TB that has a corresponding ID as the destination ID, and in this case, SD-RSRP needs to be measured only when both the source ID and destination ID are successfully decoded.

The remote UE may receive information that triggers relay reselection from the selected relay UE, and this information may be transmitted based on that the relay UE does not satisfy a Uu threshold condition. That is, when the relay UE considers that the relay UE does not satisfy the Uu threshold condition of operating as a relay UE, an indication/message indicating this may be transmitted to a remote UE that makes PC5-S/sidelink connection for the current relay operation. The remote UE receiving the indication/message may trigger relay (re)selection. The relay UE that transmits the indication/message (which corresponds to sidelink relay release) to the remote UE may release PC5-S/sidelink after transmitting the corresponding indication/message, or alternatively, the relay UE may release PC5-S/sidelink after receiving an ACK signal transmitted after the remote UE receives the corresponding indication/message. Alternatively, until the remote UE makes new connection (SL connection with new UE or Uu link connection), the remote UE may support a relaying operation and stop the relay operation after receiving a release signal from the remote UE.

When such a relay UE considers that the relay UE does not satisfy a threshold condition of operating as a relay UE, the operation may be used in combination with the above-described embodiments, but may also be used independently. Hereinafter, other examples of cases in which a relay UE considers that the relay UE does not satisfy a threshold condition of operating as a relay UE will be described.

When a Uu-RSRP value does not satisfy a condition of operating as a relay UE, the relay UE may release sidelink connection (through SL-RRC) and notify a higher layer about this. For example, when a configured Uu-RSRP threshold condition is not satisfied, the relay UE may continuously notify the higher layer about this. The higher layer performs release with a currently connected remote UE at a higher level. When there is no SL connected remote UE no longer, even if a configured Uu-RSRP threshold condition is not satisfied any longer, an AS layer of the relay UE may not notify the higher layer about this (that is, all connected remote UEs leave a relay entity after being released).

When a relay UE in a CONNECTED state considers that the relay UE does not satisfy a Uu threshold condition of operating as a relay UE, the relay UE may report this to a BS. After the BS receives the corresponding report, when there is a remote UE in a current (sidelink/Uu) CONNECTED state or there is still data that needs to be transmitted to the remote UE via a relay, even if the relay UE does not satisfy a Uu threshold condition, the BS may also notify the relay UE of this through an RRC dedicated signal such that the relay UE continuously operates as a relay UE. The relay UE receiving this may be maintained in a relay state.

Alternatively, after the BS receives the corresponding report, when there is no remote UE in a current (sidelink/Uu) CONNECTED state or there is no data that needs to be transmitted to a remote UE through a relay any longer, the BS may transfer a message to the relay UE confirming that the relay UE no longer needs to operate as a relay UE. The relay UE receiving this may not be maintained in a relay UE state any longer.

Alternatively, (in the case of L2 relay) the BS may directly instruct remote UEs (all connected to the relay UE) to reselect a relay and transfer a message to the relay UE confirming that the relay UE no longer needs to operate as a relay UE. The relay UE that receives the message does not perform relay operations any longer.

Alternatively, even if the relay UE considers that the relay UE does not satisfy a Uu threshold condition of operating as a relay UE, when there is a remote UE that is still in a CONNECTED state or PC5-S/sidelink is established for a relay operation with the remote UE, the relay UE may continue to perform an operation as a relay UE (without notifying the BS of this).

In the above description, the remote UE receives information triggering relay reselection from the relay UE and performs relay reselection. Hereinafter, various relay re-selection triggering conditions will be described in more detail. When a Uu link between the relay UE and the BS fails (or is likely to fail)/when data transmission fails (or is likely to fail), this needs to be notified to the remote UE. Herinafter, a method of determining a case in which the Uu link fails/data transmission fails and an operation taken by the remote UE when receiving the information will be described.

A. For uplink, the relay UE requires an uplink grant (UL-grant) to receive data from the remote UE and transfer the data to a gNB. The relay UE receiving the UL-grant from the gNB may transmit data received from the remote UE, to the corresponding grant. When the gNB does not receive the transmitted data, the gNB may transfer NACK to the relay UE, and the relay UE may request UL-grant (e.g., dynamic grant) for retransmission. However, when the gNB does not receive the data transmitted by the relay UE, a series of procedures for retransmission (requesting a UL-grant and transmitting data to the corresponding grant) may be repeated. There is no set value for the number of retransmissions in the current Uu link and depends on implementation of the gNB. Accordingly, when proper reception is determined to be difficult even if retransmission is attempted for a transport block (TB) to which retransmission is currently attempted, the gNB needs to instruct NDI toggling of the relay UE. The relay UE that receives instruction of the NDI toggling does not any longer request a UL-grant for the TB to which retransmission is currently attempted and releases a corresponding HARQ buffer. The relay UE needs to inform the remote UE that generates the TB through MAC CE/RRC that transmission of the TB to the BS fails.

B. For downlink, the gNB may transmit data to the relay UE (for the purpose of data transmission to the remote UE). When the relay UE is not capable of decoding the data transmitted by the gNB, the relay UE transmits NACK to the gNB. The gNB may attempt multiple retransmissions, but when the gNB continues to receive NACK or becomes DTX, the gNB may give up transmission of the corresponding TB and attempt to transmit a new TB by NDI toggling. In this case, the relay UE needs to inform the remote UE(s) that a procedure of receiving data transmission from the gNB fails.

C. A relay UE may determine whether a Uu link fails based on the number of NACKs and notify a remote UE of this. For example, when uplink data is transmitted, if more than a certain number of NACKs are received from the gNB for a transmission TB, it may be possible to notify that the uplink transmission fails in the corresponding TB transmission. At this time, the number of NACKs may vary depending on the importance, priority, and packet delay budget (PDB) of data to be transmitted. For example, if the priority of the data is high, the remaining PDB of the data is short, or the data is important data (e.g., BSR, and RSRP/CSI reporting), a reference value for the number of NACKs is configured to be small. That is, a Uu link situation may be quickly notified to the remote UE by determining that a problem occurs in Uu link transmission with a small NACK count value.

Alternatively, rather than simply informing the remote UE that transmission through a Uu link is not performed well based on the number of NACKs, a history of NACKs may be provided to inform how many times the relay UE attempts retransmsision in detail. The correspnding informaiton may help the remote UE determine whether to reselect the relay UE.

D. A channel congestion situation in a Uu link between a relay UE and a gNB and a channel congestion situation in a sidelink between the relay UE and the remote UE may be different. In this case, the relay UE may need to inform the relay UE of the channel congestion status (e.g., CBR) of the Uu link. For example, when the Uu link is in a high congestion situation and the sidelink is in a low congestion situation, the remote UE may only recognize the sidelink channel situation. In this case, when the relay UE informs the remote UE of the congestion situation of the Uu link, the remote UE may determine that the congestion situation is not good up to a final destination (e.g., gNB). The congestion situation may be notified only when a certain threshold value is exceeded, and in this case, the threshold value may vary depending on the QoS of a service to be trnsferred. The remote UE that receives the correspnding information may perform relay UE reselection triggering according to pre-configured values.

E. When a RSRP/RSRQ value of data received by the relay UE from the gNB through the Uu link falls below a certain value/is above a certain value, the relay UE notifies the remote UE or instructs relay reselection triggering. Alternatively, a new RSRP/RSRQ threshold for the relay UE may exist (preset or signaled).

F. When DTX occurs during data transmission/reception between the relay UE and the gNB or a RTT timer operates and exceeds a set standard value, RLF may be declared. In this case, the relay UE informs the remote UE that RLF is declared on the Uu link or instructs relay reselection triggering. At this time, a new RTT timer value for a relay operation may also be declared.

G. A RLM metric for Uu link radio link failure (RLF) declaration performed in RRC may be reused. If out-of-synch (OOS) correspnding to N310 occurs during T310 in the Uu link between the relay UE and the BS, RLF is declared. When RLF is declared, the relay UE may notify the remote UE that the Uu link fails or instructs relay reselection triggering.

When the remote UE is informed that the Uu link fails after RLF is declared in the Uu link, this may result in a loss in terms of latency. Therefore, the relay UE delivers a message to the remote UE indicating that the Uu link may fail at the same time the T310 timer starts or instructs relay reselection triggering such that the remote UE finds another candidate relay UE before actual Uu link failure occurs.

Alternatively, a new T310 and N310 for a relay UE may be defined. That is, the new N310 and T310 for the relay UE may be defined, and when OOS corresponding to the newly defined N310 count occurs during the newly defined T310, the relay UE may trigger relay UE reselection to the remote. This is to enable the relay UE to separate and process a reference for declaring failure of the Uu link and a reference for determining a qualification condition of the relay UE. The new T310 and N310 values may be configured by the BS to the relay UE through an RRC message based on relay communication-related information (importance, priority, and latency of a service to be transferred, and the like) reported by the relay UE to the BS. In this case, the new T310 and N310 may be shorter/smaller than the existing T310 and N310. This is because, while the existing T310 and N310 are values for determining whether a Uu link fails, the newly defined T310 and N310 for the relay UE may be used as a value to trigger relay UE reselection of the remote UE before the Uu link of the relay UE fails.

H. The method of declaring RLF with the maximum number of retransmissions of RLC may be reused. When the relay UE does not receive an ACK even after performing retransmissions that reach the maximum number of retransmissions of RLC through the Uu link, the relay UE may declare RLF and notify the remote UE of this, or instruct relay reselection triggering.

However, when relay UE reselection is triggered to the remote UE after RLF is declared, this may result in latency loss, and thus a new maximum number of retransmissions for the relay UE may be defined. When ACK is not received until the new maximum number of retransmissions for the relay UE is reached, the relay UE may instruct the remote UE to trigger relay UE reselection. The new maximum number of retransmissions may be configured by the BS to the relay UE through an RRC message based on relay communication-related information (importance, priority, and latency of the service to be transferred, and the like). The new maximum number of retransmissions may be smaller than the maximum number of retransmissions used in the existing RLF declaration. This is because, when the maximum number of retransmissions used in the existing RLF declaration is to determine that the Uu link is completely broken, the new maximum number of retransmissions may be used by the remote UE to trigger new relay UE reselection.

I. The relay UE may inform the remote UE that a desired TB is not transmitted/received properly through a Uu link or the possibility that the TB is transmitted/received properly is low using a combination of the methods A, B, C, D, E, F, G, and H described above. Here, when the TB is not transmitted/received properly, this includes not only transmitting/receiving in a state in which decoding is impossible, but also failing to satisfy the desired quality (for example, latency). The relay UE may report the state of the Uu link to the remote UE only when the remote UE determines that relay reselection is necessary according to a pre-configured condition. A remote UE that determines that data transmission/reception is not performed properly through the Uu link may perform the following relay reselection operation.

When state information about the Uu link reported from the remote UE satisfies an initially configured condition, it may be possible to find another relay UE instead of a relay UE that currently establishes connection.

When there is no initially configured condition, if the relay UE reports a Uu link state, it may be possible to find another relay UE instead of a relay UE that currently establishes connection.

When there is enough PDB for the currently transmitted TB, it may be possible to establish connection with another relay UE and attempt retransmission.

In a process of finding another relay UE, when the current relay UE is determined to be the best, random selection may be performed among the remaining candidate relay UEs.

Based on the above description, when there is a problem in terms of Uu link quality/status determination and a Uu link quality/status, the relay UE notifies the remote UE, and the remote UE triggers a relay UE reselection procedure, and perform the relay UE reselection procedure in the stated order.

The following may be considered as a method of triggering relay reselection.

When the remote UE and the relay UE are in coverage and (at least one or both of them) are in an IDLE/INACTIVE state, SL connection for a relay operation may be established using a discovery configuration included in SIB information transmitted by the gNB. After SL connection for the relay operation, the current state may become an RRC_CONNECTED state through a CONNECTED request operation to the gNB. In this case, an operation when the gNB does not provide a discovery configuration to the remote UE or relay UE through a dedication signal is proposed.

When the relay/remote UE is in an RRC_CONNECTED state, if the gNB does not provide a discovery configuration, the relay/remote UE may use SIB information.

Alternatively, when the relay/remote UE is in an RRC_CONNECTED state, if the gNB does not provide a discovery configuration,

- the remote UE may trigger relay re-selection,
- the relay UE may transmit a message(/indication) for relay re-selection triggering to the remote UE, or
- the relay/remote UE may release SL connection for a relaying operation.

Hereinafter, an embodiment of the present disclosure related to measurement of a load of a relay UE will be described. The embodiments described below may also be used in a combined form with the above-described embodiments, but may also be used independently.

In the existing LTE relay operation, the load is a value measured at a higher layer, and is indicated with 1 bit in a discovery message. The corresponding 1 bit may be a value that indicates whether an additional remote UE is to be attached to a relay UE. For example, when 1bit (on) indicates that a discovery message is broadcast, the corresponding discovery message may be notified to the currently connected remote UE, not as a value for additional remote UEs, but as a value to be broadcast for SD-RSRP measurement. Currently, in Rel-17 NR SL relay, load information has been discussed as one of relay (re)selection criteria, and there is discussion about measuring the load at an AS layer and reporting the measured load to a higher layer. In this regard, as a method of measuring the load at the AS layer in terms of resource pool usage, a relay load of the relay UE may be measured based on the number of HARQ processes and channel occupancy ratio (CR) limit.

The number of HARQ processes of the relay UE is a value to be configured by the BS, and is a value that changes dynamically and instantaneously. Therefore, to measure the number of HARQ processes, a load value of the relay UE may be measured by measuring the number of HARQ processes (on average) using a moving average method at a time side.

As another example, a channel occupancy ratio (CR) limit value may be used. A UE may measure a resource for actually transmitting a packet, and CR evaluation may be performed using past and future resources. The CR value is limited by priority, and when CR is exceeded at point n, no further transmission may be performed and the packet needs to be dropped. The CR value is linked to the CBR and is limited to resources reserved/already used by the UE. The CBR value is measured and the CR limit value is determined according to the CBR. The CR value is a value to be enforced to eliminate interference by dropping a package of a subject UE to coexist with other UEs in the entire resource pool when the subject UE knows that resources to be already used or reserved are upper-bound in the CBR situation of the current resource. Thus, the CR value may be used as a factor to measure the amount of available resources to the relay UE, and may also be used to measure the load of the relay UE. The CR value indicates that the resources to be used by the relay UE are limited for each priority, and thus the relay UE may inform the higher layer of the following information.

(a) A margin of CR limit (/the amount of available resources) for each priority is provided to the higher layer. The higher layer of the relay UE that receives this from the AS layer may broadcast the corresponding information by including the information in a discovery message (a degree of load may also be indicated as high/medium/low, or the like).

(b) (Alternatively) when a CR value measured for each priority uses resources exceeding X% of the CR limit on average (this may be configured by the BS), this may be notified to the higher layer.

(c) (Alternatively) when the CR value of a group with high priority (/group with low priority) (in this case, a group for each priority may be a value configured by the BS) uses resources more than X % of the CR limit on average, this may be reported to the higher layer.

(d) (Alternatively) when any priority reaches the CR limit, this may be notified to the higher layer.

(e) As shown in (a), (b), (c), and (d) above (combinations are also possible), the relay UE that receives this information from the AS layer may include the corresponding information in the discovery message, may not transmit the discovery message, or may indicate a discovery message for SD-RSRP measurement. (That is, the relay UE refuses to establish additional connections with remote UEs before the CR limit is reached)

(f) When the relay UE reaches a threshold of a load using the above measurement method, the relay UE refuses to establish a new connection during a PC5-S (sidelink RRC) connection process, and in this case, the relay UE may add a value due to load as a cause value of the refusal. That is, the relay UE may notify the remote UE that a connection is not capable of being currently established due to load information and may refuse the connection.

As another example, the remote UE may estimate the load and not attempt to connect to the relay UE. In detail, assuming that the remote UE and the relay UE are in close proximity, it may be assumed that the amounts of channel loads to be measured in channels are similar. Therefore, like the previously proposed method, the remote UE may determine whether to attach to the relay using the CR limit value. In other words, the remote UE measures the amount of available resources for each priority based on the CR limit (the method of measuring the load of (a), (b), (c), and (d) above may be applied) and disable the relay operation when the amount of available resources is equal to or less than a certain value. Alternatively, in this case (when the method of measuring the load of (a), (b), (c), and (d) above in the remote UE is applied), an operation of the remote UE may be restricted to attempt access for the relay only in case of higher priority (e.g., emergency service).

Examples of communication systems applicable to the present disclosure

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

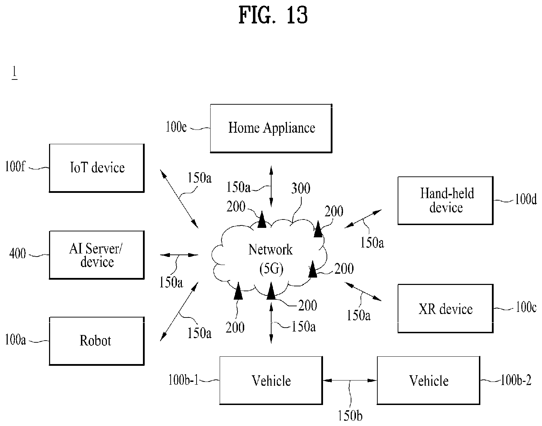

FIG. 13 illustrates a communication system 1 applied to the present disclosure.

Referring to FIG. 13, a communication system 1 applied to the present disclosure includes wireless devices, BSs, and a network. Herein, the wireless devices represent devices performing communication using RAT (e.g., 5G NR or LTE) and may be referred to as communication/radio/5G devices. The wireless devices may include, without being limited to, a robot 100a, vehicles 100b-1 and 100b-2, an extended reality (XR) device 100c, a hand-held device 100d, a home appliance 100e, an Internet of things (IoT) device 100f, and an artificial intelligence (AI) device/server 400. For example, the vehicles may include a vehicle having a wireless communication function, an autonomous driving vehicle, and a vehicle capable of performing communication between vehicles. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. V2V/V2X communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100fIBS 200, or BS 200BS 200. Herein, the wireless communication/connections may be established through various RATs (e.g., 5G NR) such as UL/DL communication 150a, sidelink communication 150b (or, D2D communication), or inter BS communication (e.g. relay, integrated access backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

Examples of wireless devices applicable to the present disclosure

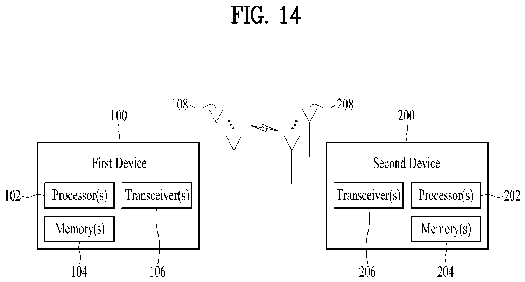

FIG. 14 illustrates wireless devices applicable to the present disclosure.

Referring to FIG. 14, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 13.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more service data unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

Examples of a vehicle or an autonomous driving vehicle applicable to the present disclosure

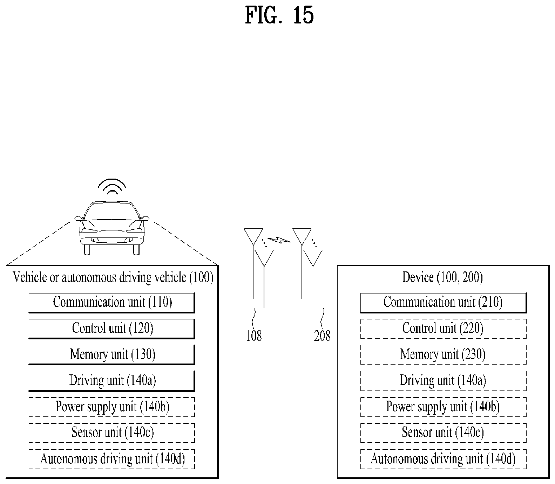

FIG. 15 illustrates a vehicle or an autonomous driving vehicle applied to the present disclosure. The vehicle or autonomous driving vehicle may be implemented by a mobile robot, a car, a train, a manned/unmanned aerial vehicle (AV), a ship, etc.

Referring to FIG. 15, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

Examples of a vehicle and AR/VR applicable to the present disclosure

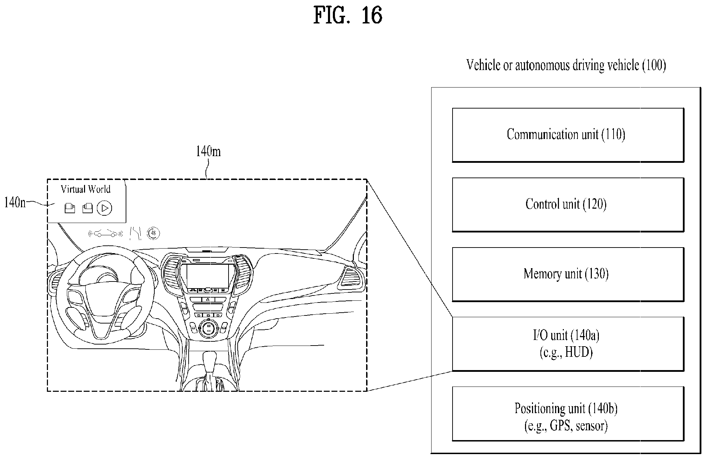

FIG. 16 illustrates a vehicle applied to the present disclosure. The vehicle may be implemented as a transport means, an aerial vehicle, a ship, etc.

Referring to FIG. 16, a vehicle 100 may include a communication unit 110, a control unit 120, a memory unit 130, an I/O unit 140a, and a positioning unit 140b.

The communication unit 110 may transmit and receive signals (e.g., data and control signals) to and from external devices such as other vehicles or BSs. The control unit 120 may perform various operations by controlling constituent elements of the vehicle 100. The memory unit 130 may store data/parameters/programs/code/commands for supporting various functions of the vehicle 100. The I/O unit 140a may output an AR/VR object based on information within the memory unit 130. The I/O unit 140a may include an HUD. The positioning unit 140b may acquire information about the position of the vehicle 100. The position information may include information about an absolute position of the vehicle 100, information about the position of the vehicle 100 within a traveling lane, acceleration information, and information about the position of the vehicle 100 from a neighboring vehicle. The positioning unit 140b may include a GPS and various sensors.

As an example, the communication unit 110 of the vehicle 100 may receive map information and traffic information from an external server and store the received information in the memory unit 130. The positioning unit 140b may obtain the vehicle position information through the GPS and various sensors and store the obtained information in the memory unit 130. The control unit 120 may generate a virtual object based on the map information, traffic information, and vehicle position information and the I/O unit 140a may display the generated virtual object in a window in the vehicle (1410 and 1420). The control unit 120 may determine whether the vehicle 100 normally drives within a traveling lane, based on the vehicle position information. If the vehicle 100 abnormally exits from the traveling lane, the control unit 120 may display a warning on the window in the vehicle through the I/O unit 140a. In addition, the control unit 120 may broadcast a warning message regarding driving abnormity to neighboring vehicles through the communication unit 110. According to situation, the control unit 120 may transmit the vehicle position information and the information about driving/vehicle abnormality to related organizations.

Examples of an XR device applicable to the present disclosure

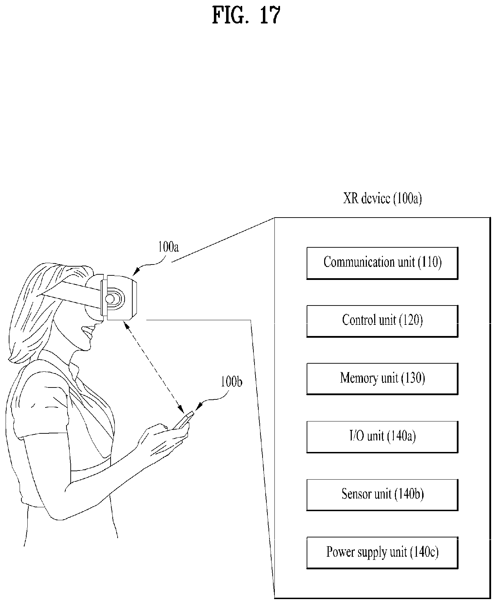

FIG. 17 illustrates an XR device applied to the present disclosure. The XR device may be implemented by an HMD, an HUD mounted in a vehicle, a television, a smartphone, a computer, a wearable device, a home appliance, a digital signage, a vehicle, a robot, etc.

Referring to FIG. 17, an XR device 100a may include a communication unit 110, a control unit 120, a memory unit 130, an I/O unit 140a, a sensor unit 140b, and a power supply unit 140c.

The communication unit 110 may transmit and receive signals (e.g., media data and control signals) to and from external devices such as other wireless devices, hand-held devices, or media servers. The media data may include video, images, and sound. The control unit 120 may perform various operations by controlling constituent elements of the XR device 100a. For example, the control unit 120 may be configured to control and/or perform procedures such as video/image acquisition, (video/image) encoding, and metadata generation and processing. The memory unit 130 may store data/parameters/programs/code/commands needed to drive the XR device 100algenerate XR object. The I/O unit 140a may obtain control information and data from the exterior and output the generated XR object. The I/O unit 140a may include a camera, a microphone, a user input unit, a display unit, a speaker, and/or a haptic module. The sensor unit 140b may obtain an XR device state, surrounding environment information, user information, etc. The sensor unit 140b may include a proximity sensor, an illumination sensor, an acceleration sensor, a magnetic sensor, a gyro sensor, an inertial sensor, an RGB sensor, an IR sensor, a fingerprint recognition sensor, an ultrasonic sensor, a light sensor, a microphone and/or a radar. The power supply unit 140c may supply power to the XR device 100a and include a wired/wireless charging circuit, a battery, etc.

For example, the memory unit 130 of the XR device 100a may include information (e.g., data) needed to generate the XR object (e.g., an AR/VR/MR object). The I/O unit 140a may receive a command for manipulating the XR device 100a from a user and the control unit 120 may drive the XR device 100a according to a driving command of a user. For example, when a user desires to watch a film or news through the XR device 100a, the control unit 120 transmits content request information to another device (e.g., a hand-held device 100b) or a media server through the communication unit 130. The communication unit 130 may download/stream content such as films or news from another device (e.g., the hand-held device 100b) or the media server to the memory unit 130. The control unit 120 may control and/or perform procedures such as video/image acquisition, (video/image) encoding, and metadata generation/processing with respect to the content and generate/output the XR object based on information about a surrounding space or a real object obtained through the I/O unit 140alsensor unit 140b.

The XR device 100a may be wirelessly connected to the hand-held device 100b through the communication unit 110 and the operation of the XR device 100a may be controlled by the hand-held device 100b. For example, the hand-held device 100b may operate as a controller of the XR device 100a. To this end, the XR device 100a may obtain information about a 3D position of the hand-held device 100b and generate and output an XR object corresponding to the hand-held device 100b.

Examples of a robot applicable to the present disclosure

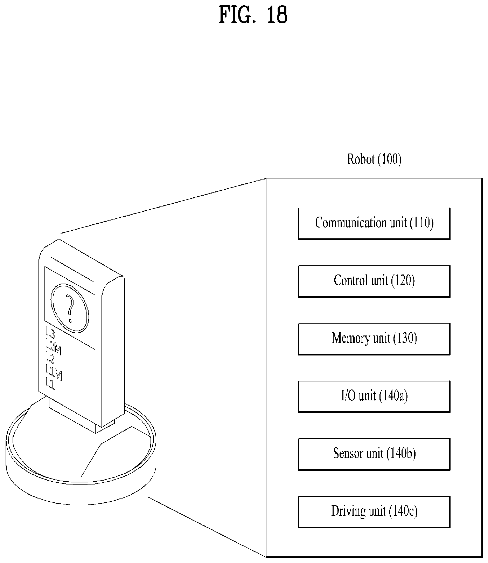

FIG. 18 illustrates a robot applied to the present disclosure. The robot may be categorized into an industrial robot, a medical robot, a household robot, a military robot, etc., according to a used purpose or field.

Referring to FIG. 18, a robot 100 may include a communication unit 110, a control unit 120, a memory unit 130, an I/O unit 140a, a sensor unit 140b, and a driving unit 140c. Herein, the blocks 110 to 130/140a to 140c correspond to the blocks 110 to 130/140 of FIG. 14, respectively.

The communication unit 110 may transmit and receive signals (e.g., driving information and control signals) to and from external devices such as other wireless devices, other robots, or control servers. The control unit 120 may perform various operations by controlling constituent elements of the robot 100. The memory unit 130 may store data/parameters/programs/code/commands for supporting various functions of the robot 100. The I/O unit 140a may obtain information from the exterior of the robot 100 and output information to the exterior of the robot 100. The I/O unit 140a may include a camera, a microphone, a user input unit, a display unit, a speaker, and/or a haptic module. The sensor unit 140b may obtain internal information of the robot 100, surrounding environment information, user information, etc. The sensor unit 140b may include a proximity sensor, an illumination sensor, an acceleration sensor, a magnetic sensor, a gyro sensor, an inertial sensor, an IR sensor, a fingerprint recognition sensor, an ultrasonic sensor, a light sensor, a microphone, a radar, etc. The driving unit 140c may perform various physical operations such as movement of robot joints. In addition, the driving unit 140c may cause the robot 100 to travel on the road or to fly. The driving unit 140c may include an actuator, a motor, a wheel, a brake, a propeller, etc.

Example of AI device to which the present disclosure is applied.

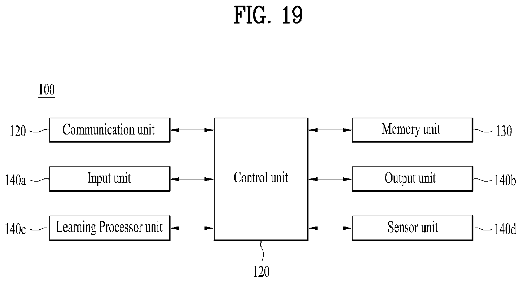

FIG. 19 illustrates an AI device applied to the present disclosure. The AI device may be implemented by a fixed device or a mobile device, such as a TV, a projector, a smartphone, a PC, a notebook, a digital broadcast terminal, a tablet PC, a wearable device, a Set Top Box (STB), a radio, a washing machine, a refrigerator, a digital signage, a robot, a vehicle, etc.

Referring to FIG. 19, an AI device 100 may include a communication unit 110, a control unit 120, a memory unit 130, an I/O unit 140a/140b, a learning processor unit 140c, and a sensor unit 140d. The blocks 110 to 130/140a to 140d correspond to blocks 110 to 130/140 of FIG. 14, respectively.

The communication unit 110 may transmit and receive wired/radio signals (e.g., sensor information, user input, learning models, or control signals) to and from external devices such as other AI devices (e.g., 100x, 200, or 400 of FIG. 13) or an AI server (e.g., 400 of FIG. 13) using wired/wireless communication technology. To this end, the communication unit 110 may transmit information within the memory unit 130 to an external device and transmit a signal received from the external device to the memory unit 130.

The control unit 120 may determine at least one feasible operation of the AI device 100, based on information which is determined or generated using a data analysis algorithm or a machine learning algorithm. The control unit 120 may perform an operation determined by controlling constituent elements of the AI device 100. For example, the control unit 120 may request, search, receive, or use data of the learning processor unit 140c or the memory unit 130 and control the constituent elements of the AI device 100 to perform a predicted operation or an operation determined to be preferred among at least one feasible operation. The control unit 120 may collect history information including the operation contents of the AI device 100 and operation feedback by a user and store the collected information in the memory unit 130 or the learning processor unit 140c or transmit the collected information to an external device such as an AI server (400 of FIG. 13). The collected history information may be used to update a learning model.

The memory unit 130 may store data for supporting various functions of the AI device 100. For example, the memory unit 130 may store data obtained from the input unit 140a, data obtained from the communication unit 110, output data of the learning processor unit 140c, and data obtained from the sensor unit 140. The memory unit 130 may store control information and/or software code needed to operate/drive the control unit 120.

The input unit 140a may acquire various types of data from the exterior of the AI device 100. For example, the input unit 140a may acquire learning data for model learning, and input data to which the learning model is to be applied. The input unit 140a may include a camera, a microphone, and/or a user input unit. The output unit 140b may generate output related to a visual, auditory, or tactile sense. The output unit 140b may include a display unit, a speaker, and/or a haptic module. The sensing unit 140 may obtain at least one of internal information of the AI device 100, surrounding environment information of the AI device 100, and user information, using various sensors. The sensor unit 140 may include a proximity sensor, an illumination sensor, an acceleration sensor, a magnetic sensor, a gyro sensor, an inertial sensor, an RGB sensor, an IR sensor, a fingerprint recognition sensor, an ultrasonic sensor, a light sensor, a microphone, and/or a radar.

The learning processor unit 140c may learn a model consisting of artificial neural networks, using learning data. The learning processor unit 140c may perform AI processing together with the learning processor unit of the AI server (400 of FIG. 13). The learning processor unit 140c may process information received from an external device through the communication unit 110 and/or information stored in the memory unit 130. In addition, an output value of the learning processor unit 140c may be transmitted to the external device through the communication unit 110 and may be stored in the memory unit 130.

INDUSTRIAL APPLICABILITY

The above-described embodiments of the present disclosure are applicable to various mobile communication systems.

**Claims**

1. A sidelink-related operation method of a remote user equipment (UE) in a wireless communication system, the method comprising:

    receiving a predetermined signal from each of one or more candidate relay UEs, by a remote LTE;
    performing measurement on the predetermined signal, by the remote LTE; and
    selecting a relay UE, by the remote UE,
    wherein the predetermined signal includes Uu link threshold-related information of each of the candidate relay UEs, and the remote UE selects the relay UE based on quality of service (QoS) of a service to be transmitted and received through the relay and the Uu link threshold-related information of each of the candidate relay UE.

2. The method of claim 1, wherein the selecting of the relay UE includes:
determining a candidate relay UE set including relay UEs having a greater Uu link threshold value than a first Uu link threshold related to the QoS and selecting a relay UE having a highest received signal strength from the candidate relay set, by the remote UE.

3. The method of claim 2, wherein the first Uu link threshold is different depending on the service.

4. The method of claim 2, wherein relay UEs included in the candidate relay UE set satisfy a second Uu link threshold corresponding to a minimum Uu link signal strength for a relay.

5. The method of claim 4, wherein, based on absence of the relay UE included in the candidate relay UE set, the remote UE selects a relay UE with a highest signal strength among the relay UEs that satisfy the second Uu link threshold.

6. The method of claim 1, wherein, based on the predetermined signal being a discovery message, the remote UE performs measurement even if only physical layer ID information is successfully decoded from the physical layer ID information and medium access control (MAC) layer ID information of the discovery message.

7. The method of claim 7, wherein a sidelink control channel (SCI) related to the discovery message includes only a source ID from the source ID and a destination ID.

8. The method of claim 6, wherein the measurement is related to sidelink reference signal received power (SD-RSRP).

9. The method of claim 1, wherein a relay load of the relay UE is measured based on a number of HARQ processes, and a channel occupancy ratio (CR) limit.

10. The method of claim 1, wherein the relay UE measures a relay load based on at least one of information related to a CR limit margin for each priority, or information indicating that a resource with a measured CR value for each priority, which is equal to or greater than a preset ratio of a CR limit on average, is used and that a resource with a CR value of a group having a high priority, which is equal to or greater than a preset ratio of a CR limit on average, is used.

11. The method of claim 1, wherein the remote UE receives information triggering relay reselection from the selected relay UE.

12. The method of claim 11, wherein the information triggering the relay reselection is transmitted based on that the relay UE does not satisfy a Uu threshold condition.

13. A remote user equipment (UE) in a wireless communication system, comprising:

at least one processor; and
at least one computer memory operatively connected to the at least one processor and configured to store instructions that, when executed, cause the at least one processor to perform operations including:

receiving a predetermined signal from each of one or more candidate relay UEs;
performing measurement on the predetermined signal; and
selecting a relay UE;
wherein the predetermined signal includes Uu link threshold-related information of each of the candidate relay UEs, and the remote UE selects the relay UE based on quality of service (QoS) of a service to be transmitted and received through the relay and the Uu link threshold-related information of each of the candidate relay UE.

14. A processor for performing operations for a remote user equipment (UE) in a wireless communication system, the operations comprising:

receiving a predetermined signal from each of one or more candidate relay UEs;
performing measurement on the predetermined signal; and
selecting a relay UE;
wherein the predetermined signal includes Uu link threshold-related information of each of the candidate relay UEs, and the remote UE selects the relay UE based on quality of service (QoS) of a service to be transmitted and received through the relay and the Uu link threshold-related information of each of the candidate relay UE.

15. A non-volatile computer-readable storage medium for storing at least one computer program including an instruction that, when executed by at least one processor, causes the at least one processor to perform operations for a remote user equipment (UE), the operations comprising:

receiving a predetermined signal from each of one or more candidate relay UEs;
performing measurement on the predetermined signal; and
selecting a relay UE;
wherein the predetermined signal includes Uu link threshold-related information of each of the candidate relay UEs, and the remote UE selects the relay UE based on quality of service (QoS) of a service to be transmitted and received through the relay and the Uu link threshold-related information of each of the candidate relay UE.

# FIG. 1

# FIG. 2

FIG. 3

(a)

UE

PDCP
RLC
MAC
PHY

eNB

PDCP
RLC
MAC
PHY

(b)

UE

NAS
RRC
PDCP
RLC
MAC
PHY

eNB

RRC
PDCP
RLC
MAC
PHY

MME

NAS

# FIG. 4

FIG. 5

gNB

| Inter-Cell RRM |
| --- |
| RB Control |
| Connection Mobility Control |
| Radio Access Control |
| Measurement Configuration and Provisioning |
| Dynamic Resource Allocation (Scheduler) |

NG-RAN

AMF

| NAS Security |
| --- |
| Idle-State Mobility Processing |

SMF

| UE IP Address Allocation |
| --- |
| PDU Session Control |

UPF

| Mobility Anchoring |
| --- |
| PDU Processing |

5GC

Internet

# FIG. 6

## FIG. 7

# FIG. 8

PU5-U

(a)

PU5-C

(b)

# FIG. 9

## UE A

SDAP ←→ SDAP

PDCP ←→ PDCP

RLC ←→ RLC

MAC ←→ MAC

PHY ←→ PHY

## UE B

PU5-U

(a)

## UE A

RRc ←→ RRC

PDCP ←→ PDCP

RLC ←→ RLC

MAC ←→ MAC

PHY ←→ PHY

## UE B

PU5-U

(b)

# FIG. 10

FIG. 11

# FIG. 12

Receive predetermined signal from each
of one or more candidate relay UEs — S1201

↓

Perform measurement on
predetermined signal — S1202

↓

Select relay UE — S1203

# FIG. 13

FIG. 14

# FIG. 15

| Vehicle or autonomous driving vehicle (100) |
| --- |
| Communication unit (110) |
| Control unit (120) |
| Memory unit (130) |
| Driving unit (140a) |
| Power supply unit (140b) |
| Sensor unit (140c) |
| Autonomous driving unit (140d) |

108    208

| Device (100, 200) |
| --- |
| Communication unit (210) |
| Control unit (220) |
| Memory unit (230) |
| Driving unit (140a) |
| Power supply unit (140b) |
| Sensor unit (140c) |
| Autonomous driving unit (140d) |

## FIG. 16

Vehicle or autonomous driving vehicle (100)

Virtual World

140m

140n

| Communication unit (110) |
| --- |

| Control unit (120) |
| --- |

| Memory unit (130) |
| --- |

| I/O unit (140a)<br>(e.g., HUD) |
| --- |

| Positioning unit (140b)<br>(e.g., GPS, sensor) |
| --- |

EP 4 319 452 A1

# FIG. 17

XR device (100a)

100a

Communication unit (110)

Control unit (120)

Memory unit (130)

I/O unit (140a)

Sensor unit (140b)

Power supply unit (140c)

100b

FIG. 18

Robot (100)

Communication unit (110)

Control unit (120)

Memory unit (130)

I/O unit (140a)

Sensor unit (140b)

Driving unit (140c)

## FIG. 19

<u>100</u>

120 — Communication unit ⟷ Control unit ⟷ Memory unit — 130

140a — Input unit ⟷ Control unit ⟷ Output unit — 140b

140c — Learning Processor unit ⟷ Control unit ⟷ Sensor unit — 140d

120

<table>
<tr><td colspan="2" align="center">**INTERNATIONAL SEARCH REPORT**</td><td colspan="2">International application No.<br>**PCT/KR2022/004723**</td></tr>
</table>

| A. | CLASSIFICATION OF SUBJECT MATTER |
|---|---|

**H04W 76/14**(2018.01)i; **H04W 76/30**(2018.01)i; **H04W 76/20**(2018.01)i; **H04W 40/22**(2009.01)i; **H04W 40/12**(2009.01)i; **H04W 24/10**(2009.01)i; **H04W 88/04**(2009.01)i; **H04W 92/18**(2009.01)i; **H04W 76/19**(2018.01)i

According to International Patent Classification (IPC) or to both national classification and IPC

| B. | FIELDS SEARCHED |
|---|---|

Minimum documentation searched (classification system followed by classification symbols)

H04W 76/14(2018.01); H04W 24/08(2009.01); H04W 36/22(2009.01); H04W 36/26(2009.01); H04W 40/22(2009.01); H04W 74/04(2009.01); H04W 76/02(2009.01); H04W 88/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 릴레이 단말(relay UE), 리모트 단말(remote UE), Uu link threshold, 서비스 품질 (service quality), 임계값(threshold)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | WO 2016-182597 A1 (INTEL IP CORPORATION) 17 November 2016 (2016-11-17)<br>See paragraphs [0042], [0085], [0089] and [0104]. | 1-5,11-15 |
| A | | 6-10 |
| Y | US 0595256 B1 (SPRINT SPECTRUM LP) 17 March 2020 (2020-03-17)<br>See column 10, lines 3-4. | 1-5,11-15 |
| A | WO 2020-209631 A1 (LG ELECTRONICS INC.) 15 October 2020 (2020-10-15)<br>See paragraphs [0018]-[0040]. | 1-15 |
| A | KR 10-2017-0138877 A (SAMSUNG ELECTRONICS CO., LTD.) 18 December 2017 (2017-12-18)<br>See paragraphs [0048]-[0123]. | 1-15 |
| A | CATT. Summary document for AI 8.7.3. R2-2102224, 3GPP TSGRAN WG2 Meeting #113-e, Electronic. 25 January 2021.<br>See sections 2.1-2.3. | 1-15 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 July 2022** | **15 July 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

<table>
<tr><td colspan="2" align="center">INTERNATIONAL SEARCH REPORT<br>Information on patent family members</td><td colspan="2">International application No.<br><br>**PCT/KR2022/004723**</td></tr>
</table>

| Patent document cited in search report | Publication date (day/month/year) | Patent family member(s) | Publication date (day/month/year) |
|---|---|---|---|
| WO 2016-182597 A1 | 17 November 2016 | CN 107637162 A | 26 January 2018 |
| | | EP 3295757 A1 | 21 March 2018 |
| | | EP 3295757 B1 | 27 April 2022 |
| | | HK 1249332 A1 | 26 October 2018 |
| | | US 10904933 B2 | 26 January 2021 |
| | | US 2018-0098370 A1 | 05 April 2018 |
| | | US 2019-0380159 A1 | 12 December 2019 |
| US 0595256 B1 | 17 March 2020 | US 10880803 B1 | 29 December 2020 |
| WO 2020-209631 A1 | 15 October 2020 | US 2022-0183057 A1 | 09 June 2022 |
| KR 10-2017-0138877 A | 18 December 2017 | US 10341009 B2 | 02 July 2019 |
| | | US 10958333 B2 | 23 March 2021 |
| | | US 2017-0359116 A1 | 14 December 2017 |
| | | US 2019-0326979 A1 | 24 October 2019 |
| | | WO 2017-213438 A1 | 14 December 2017 |

Form PCT/ISA/210 (patent family annex) (July 2019)